(19)

**Europäisches Patentamt**
**European Patent Office**
**Office européen des brevets**

(11) **EP 4 628 922 A1**

(12) **EUROPEAN PATENT APPLICATION**

(43) Date of publication:
**08.10.2025 Bulletin 2025/41**

(21) Application number: **25157959.5**

(22) Date of filing: **14.02.2025**

(51) International Patent Classification (IPC):
**G01S 3/04** *(2006.01)*     **G01S 3/30** *(2006.01)*
**G01S 3/48** *(2006.01)*     **G01S 5/10** *(2006.01)*
**H01Q 7/06** *(2006.01)*     **H01Q 21/06** *(2006.01)*
**H01Q 21/29** *(2006.01)*

(52) Cooperative Patent Classification (CPC):
**G01S 3/043; G01S 3/30; G01S 3/48; G01S 5/10;**
**H01Q 7/06; H01Q 21/06;** H01Q 21/293

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **01.04.2024  US 202418623710**
**01.04.2024  US 202418623760**
**01.04.2024  US 202418623803**

(71) Applicant: **The Boeing Company**
**Arlington, VA 22202 (US)**

(72) Inventor: **MURPHY, Timothy Allen**
**Arlington, 22202 (US)**

(74) Representative: **Boult Wade Tennant LLP**
**Salisbury Square House**
**8 Salisbury Square**
**London EC4Y 8AP (GB)**

(54) **SYSTEMS AND METHODS FOR AUTOMATIC DIRECTION FINDING**

(57)     A method includes receiving a first signal from a first loop antenna and a second signal from a second loop antenna. The method includes sampling the first signal and the second signal at a sampling rate high enough to capture an entire frequency range associated with a plurality of radio sources to generate a first digital signal and a second digital signal. The method includes converting the first digital signal and the second digital signal to a frequency domain representation. The method also includes generating, based on the frequency domain representation, a first bearing estimate for a radio source of the plurality of radio sources by comparing the relative amplitudes and phases of the first digital signal and the second digital signal as represented in the frequency domain.

FIG. 1

EP 4 628 922 A1

## Description

## FIELD OF THE DISCLOSURE

The subject disclosure is generally related to systems and methods for automatic direction finding.

## BACKGROUND

An Automatic Direction Finder (ADF) is a navigation instrument used in aviation. The ADF provides a pilot with information about the direction of a radio transmitter at a known location relative to an aircraft by measuring relative strengths of signals received from the radio transmitter station on the aircraft by one or more loop antennas.

In certain operational contexts, use of ADFs has decreased in favor of other navigation systems such as global positioning systems (GPS). The move to GPS has been spurred by, among other reasons, the superior performance and global coverage offered by GPS, the ability of GPS to integrate with other avionics systems more readily, and the smaller form factors available to GPS systems as opposed to traditional ADF. However, ADFs remain in place in many aircraft, particularly in areas where other navigation systems are unavailable or less effective to act as a backup for GPS. ADFs also remain in use for smaller aircraft, older aircraft, etc., where it is not cost-effective to move to more sophisticated means of navigation.

## SUMMARY

In some examples, an automatic direction finder includes a first loop antenna, a second loop antenna, and one or more processors coupled to the first loop antenna and the second loop antenna. The one or more processors are configured to receive a first signal from the first loop antenna and a second signal from the second loop antenna. The one or more processors are configured to sample the first signal and the second signal over a frequency range high enough to capture an entire frequency range associated with a plurality of radio sources to generate a first digital signal and a second digital signal. The one or more processors are configured to convert the first digital signal and the second digital signal to a frequency domain representation. The one or more processors are also configured to generate, based on the frequency domain representation, a first bearing estimate for a radio source of the plurality of radio sources by comparing the relative amplitudes and phases of the first digital signal and the second digital signal as represented in the frequency domain.

In some examples, a non-transitory, computer-readable medium includes instructions that, when executed by one or more processors, cause the one or more processors to receive a first signal from the first loop antenna and a second signal from the second loop antenna. The instructions, when executed by the one or more processors, cause the one or more processors to sample the first signal and the second signal over a frequency range high enough to capture an entire frequency range associated with a plurality of radio sources to generate a first digital signal and a second digital signal. The instructions, when executed by the one or more processors, cause the one or more processors to convert the first digital signal and the second digital signal to a frequency domain representation. The instructions, when executed by the one or more processors, cause the one or more processors to generate, based on the frequency domain representation, a first bearing estimate for a radio source of the plurality of radio sources by comparing the relative amplitudes and phases of the first digital signal and the second digital signal as represented in the frequency domain.

In some examples, a method includes receiving a first signal from the first loop antenna and a second signal from the second loop antenna. The method includes sampling the first signal and the second signal over a frequency range high enough to capture an entire frequency range associated with a plurality of radio sources to generate a first digital signal and a second digital signal. The method includes converting the first digital signal and the second digital signal to a frequency domain representation. The method includes generating, based on the frequency domain representation, a first bearing estimate for a radio source of the plurality of radio sources by comparing the relative amplitudes and phases of the first digital signal and the second digital signal as represented in the frequency domain.

In some examples, a device includes means for means for means for receiving a first signal from the first loop antenna and a second signal from the second loop antenna. The device includes means for sampling the first signal and the second signal over a frequency range high enough to capture an entire frequency range associated with a plurality of radio sources to generate a first digital signal and a second digital signal. The device includes means for converting the first digital signal and the second digital signal to a frequency domain representation. The device includes means for generating, based on the frequency domain representation, a first bearing estimate for a radio source of the plurality of radio sources by comparing the relative amplitudes and phases of the first digital signal and the second digital signal as represented in the frequency domain.

In some examples, a system includes one or more processors configured to receive, from an automatic direction finder, a first bearing estimate associated with a first orientation relative to a first radio source. The first bearing estimate is based on a first plurality of bearing measurements. A first portion of the first plurality of bearing measurements is based on a first signal from a first loop antenna and a second portion of the first plurality of bearing measurements is based on a second signal from a second loop antenna. The one or more processors are configured to receive, from the automatic direction finder, a second bearing estimate associated with a second orientation relative to a second radio source. The second bearing estimate is based on a second plurality of bearing measurements. A first portion of the second plurality of bearing measurements is based on the first signal from the first loop antenna and a second portion of the second plurality of bearing measurements is based on the second signal from the second loop antenna. The one or more processors are also configured to determine a location based at least on the first bearing estimate and the second bearing estimate.

In some examples, a non-transitory computer-readable medium includes instructions that, when executed by one or more processors, cause the one or more processors to receive, from an automatic direction finder, a first bearing estimate associated with a first orientation relative to a first radio source. The first bearing estimate is based on a first plurality of bearing measurements. A first portion of the first plurality of bearing measurements is based on a first signal from a first loop antenna and a second portion of the first plurality of bearing measurements is based on a second signal from a second loop antenna. The instructions, when executed by one or more processors, cause the one or more processors to receive, from the automatic direction finder, a second bearing estimate associated with a second orientation relative to a second radio source. The second bearing estimate is based on a second plurality of bearing measurements. A first portion of the second plurality of bearing measurements is based on the first signal from the first loop antenna and a second portion of the second plurality of bearing measurements is based on the second signal from the second loop antenna. The instructions, when executed by one or more processors, also cause the one or more processors to determine a location based at least on the first bearing estimate and the second bearing estimate.

In some examples, a method includes receiving, from an automatic direction finder, a first bearing estimate associated with a first orientation relative to a first radio source. The first bearing estimate is based on a first plurality of bearing measurements. A first portion of the first plurality of bearing measurements is generated by one or more processors based on a first signal from a first loop antenna and a second portion of the first plurality of bearing measurements is generated by the one or more processors based on a second signal from a second loop antenna. The method includes receiving, from the automatic direction finder, a second bearing estimate associated with a second orientation relative to a second radio source. The second bearing estimate is based on a second plurality of bearing measurements. A first portion of the second plurality of bearing measurements is generated by the one or more processors based on the first signal from the first loop antenna and a second portion of the second plurality of bearing measurements is generated by the one or more processors based on the second signal from the second loop antenna. The method also includes determining a location based at least on the first bearing estimate and the second bearing estimate.

In some examples, a device includes means for receiving, from an automatic direction finder, a first bearing estimate associated with a first orientation relative to a first radio source. The first bearing estimate is based on a first plurality of bearing measurements. A first portion of the first plurality of bearing measurements is generated by one or more processors based on a first signal from a first loop antenna and a second portion of the first plurality of bearing measurements is generated by the one or more processors based on a second signal from a second loop antenna. The device includes means for receiving, from the automatic direction finder, a second bearing estimate associated with a second orientation relative to a second radio source. The second bearing estimate is based on a second plurality of bearing measurements. A first portion of the second plurality of bearing measurements is generated by the one or more processors based on the first signal from the first loop antenna and a second portion of the second plurality of bearing measurements is generated by the one or more processors based on the second signal from the second loop antenna. The device also includes means for determining a location based at least on the first bearing estimate and the second bearing estimate.

In some examples, an antenna includes a core. The antenna includes a first loop antenna comprising a first plurality of conductive loops formed around the core. The antenna includes a second loop antenna comprising a second plurality of conductive loops formed around the core at a first angle relative to the first plurality of conductive loops. The antenna also includes a third loop antenna comprising a third plurality of conductive loops formed around the core at a second angle relative to the first plurality of conductive loops.

In some examples, a device includes an antenna and an electronics unit coupled to the antenna. The antenna includes a core. The antenna also includes a first loop antenna comprising a first plurality of conductive loops formed around the core, a second loop antenna comprising a second plurality of conductive loops formed around the core at a first angle relative to the first plurality of conductive loops, and a third loop antenna comprising a third plurality of conductive loops formed around the core at a second angle relative to the first plurality of conductive loops. The electronics unit includes a receiver configured to receive a first signal from the first loop antenna, a second signal from the second loop antenna, and a third signal from the third loop antenna. The electronics unit also includes a software-defined radio component configured to process signals associated with the first signal, the second signal, and the third signal.

In some examples, a device includes a housing, an antenna contained within the housing, an electronics unit contained within the housing and coupled to the antenna, and an interface contained within the housing and coupled to the electronics unit, the interface configured to enable data transfer from the electronics unit to a second device external to the housing. The antenna includes a core, a first loop antenna comprising a first conductive loop formed around the core, a second loop antenna comprising a second conductive loop formed around the core at a first angle relative to the first conductive loop, and a third loop antenna comprising a third conductive loop formed around the core at a second angle relative to the first loop antenna. The electronics unit includes a receiver configured to receive a first signal from the first loop antenna, a second signal from the second loop antenna, and a third signal from the third loop antenna. The electronics unit also includes a software-defined radio component configured to process signals associated with the first signal, the second signal, and the third signal.

**BRIEF DESCRIPTION OF THE DRAWINGS**

FIG. 1 depicts an example system for automatic direction finding.
FIG. 2 depicts another example system for automatic direction finding.
FIG. 3 depicts another example system for automatic direction finding.
FIG. 4 depicts another example system for automatic direction finding.
FIG. 5 illustrates an example antenna.
FIG. 6 illustrates an example device for automatic direction finding.
FIG. 7 illustrates an example determination of a location of an ADF.
FIG. 8 is a flow chart of an example method for automatic direction finding.
FIG. 9 is a flow chart of another example method for automatic direction finding.
FIG. 10 is a flow chart of an example method for position estimation.
FIG. 11 is a block diagram of a computing environment including a computing device configured to support examples of computer-implemented methods and computer-executable program instructions (or code).

**DETAILED DESCRIPTION**

For efficient and safe aircraft operation, aircraft are often equipped with an automatic direction finder (ADF). In recent years, many aircraft have moved to the use of a Global Positioning System (GPS) for navigation instead of, or in addition to, the ADF. However, the ADF remains a valuable tool for aircraft navigation, particularly in situations where the GPS equipment has failed, the GPS signal is unavailable (e.g., in a geographic area in which the GPS signal is being blocked), the GPS signal is being spoofed, etc. The ADF described herein can be used as an independent and/or alternative navigation device.

A technical advantage of the subject disclosure is to provide navigational redundancy independent of GPS. The systems and methods disclosed herein provide a redundant navigation tool that can be used in case of failures in other navigation systems like GPS or inertial navigation systems.

Another technical advantage of the subject disclosure is to provide broader navigational coverage. The systems and methods disclosed herein can operate in areas where other navigation systems may be less effective or nonexistent, such as remote or less-developed regions of the world.

Another technical advantage of the subject disclosure is to provide a navigational tool upgrade for older aircraft that have not been retrofitted with the latest navigation technology due to costs associated with the latest navigation technology.

Another technical advantage of the subject disclosure is to aid aircraft operators in meeting regulatory requirements while increasing efficiency and capabilities of an ADF. For example, a particular regulatory agency can have specific requirements regarding the types of navigation equipment that must be installed in aircraft. ADFs have traditionally been required by certain regulatory frameworks and may continue to be required in the future.

Another technical advantage of the subject disclosure is an increase in capabilities of the ADF carried on the aircraft of most major aircraft operators. For example, as described in more detail below, the systems and methods disclosed herein can provide multiple bearing estimates that can be used to employ fault detection and exclusion operations to increase accuracy of a bearing of an aircraft and can be used to provide an estimate of a location of the aircraft.

Another technical advantage of the subject disclosure is to decrease the total size required for an ADF, which increases the space on an aircraft available for other equipment. The systems and methods disclosed herein can also decrease the complexity required to accommodate certain legacy ADFs, such as by decreasing the quantity and/or extent of cabling and other electronic equipment used to connect an ADF to other avionics of the aircraft.

The subject disclosure describes systems and methods for automatic direction finding. For example, an ADF is disclosed that has a reduced size and reduced weight, as compared to certain widely used legacy ADFs, as well as additional capabilities.

In some examples, the ADF can be a drop-in replacement for an ARINC 712 form factor ADF with substantial portions of the system removed. (Airlines Electronic Engineering Committee (AEEC), Aviation Maintenance Conference (AMC), and Flight Simulator Engineering and Maintenance Conference (FSEMC) are aviation industry activities organized by ARINC Industry Activities, an industry program of SAE Industry Technologies Consortia (ITC). "ARINC" is a registered trademark of Arinc Incorporated of Annapolis, Maryland). In some examples, including this example, the ADF can include the functions of a conventional ADF and the same interfaces and controls so that it can be integrated easily into an aircraft that uses an ARINC 712-style ADF without requiring changes to other systems on the aircraft other than wiring and a potential removal of a physical equipment rack, while performing the same functionality as conventional ADFs and functionality beyond conventional ADFs. Specifically, the systems and methods disclosed herein can enable simultaneous bearing measurements to multiple non-directional beacons (NDBs) or amplitude modulation (AM) radio stations operating in the band of 190 kHz to 1.75 MHz High frequency transmission in the 2 to 20 MHz band can be also used as a source of bearing measurements. Conventional ADFs can only track and make a bearing measurement to a single transmitter at a time. Consequently, two separate ADF receivers are needed to get two bearing measurements needed for a position fix. With the ADF of the subject disclosure, a plurality of software-based receiver chains can operate in parallel to track multiple signals and derive bearings to multiple sources. The number of bearing measurements would be limited only by the available signal sources and the system's processing capacity.

In some examples, the systems and methods disclosed herein can include an arrangement of four crossed loops rather than the two crossed loops used by some conventional ADFs. The use of four loops gives more accurate bearing measurements and enables fault detection and isolation for potential failures of one of the loop antennas. Generally, any number of loops greater than or equal to two could be used. Use of three loops can enable some fault detection. Use of four loops or more can enable fault detection and isolation. The more observations (i.e. loops) used, the greater the degree of fault detection and isolation and the accuracy of the final measurement.

The figures and the following description illustrate specific exemplary examples. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims.

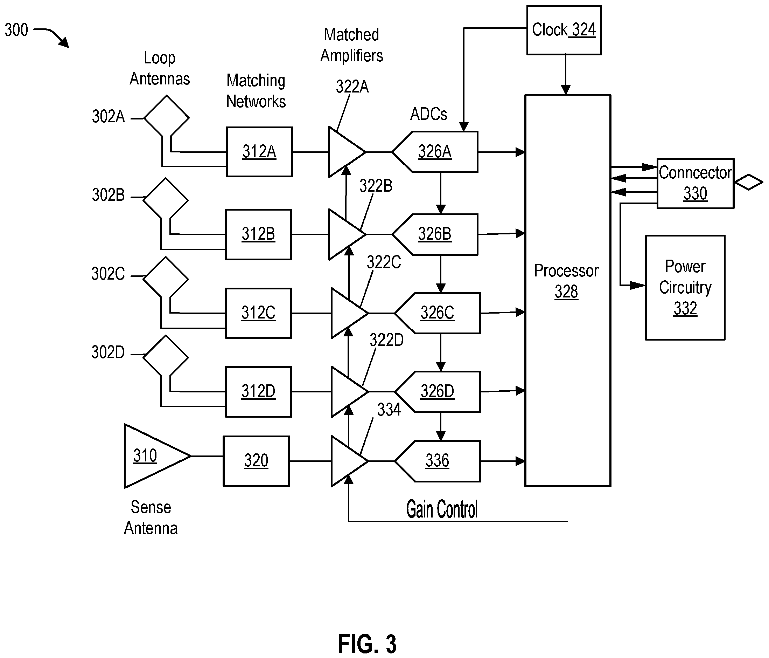

Particular examples are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 3, multiple loop antennas are illustrated and associated with reference numbers 302A, 302B, 302C, and 302D. When referring to a particular one of these loop antennae, such as the loop antenna 302A, the distinguishing letter "A" is used. However, when referring to any arbitrary one of these loop antennas, the reference number 302 is used without a distinguishing letter.

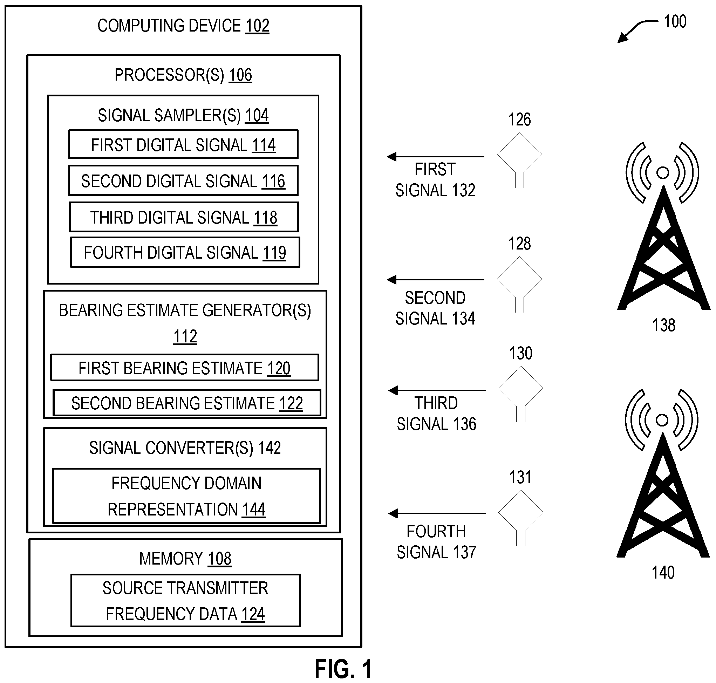

As used herein, various terminology is used for the purpose of describing particular examples only and is not intended to be limiting. For example, the singular forms "a," "an," and "the" are intended to include the plural forms as well, unless the context clearly indicates otherwise. Further, some features described herein are singular in some examples and plural in other examples. To illustrate, FIG. 1 depicts a system 100 including one or more processors ("processor(s)" 106 in FIG. 1), which indicates that in some examples the system 100 includes a single processor 106 and in other examples the system 100 includes multiple processors 106. For ease of reference herein, such features are generally introduced as "one or more" features and are subsequently referred to in the singular or optional plural (as indicated by "(s)") unless examples related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

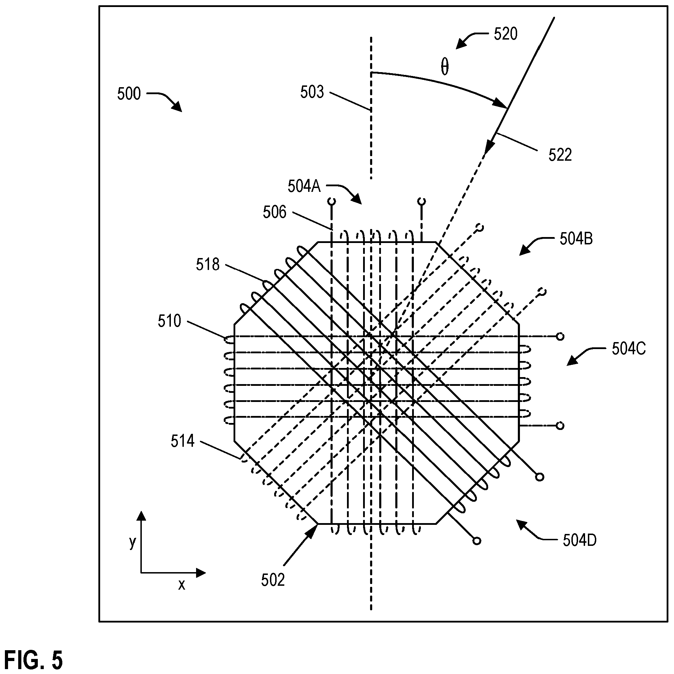

FIG. 1 depicts an example system 100 for automatic direction finding. In some examples, the system 100 includes a computing device 102 configured to receive a first signal 132 via a first loop antenna 126 and a second signal 134 via a second loop antenna 128. In some examples, the computing device 102 can also be configured to receive a third signal 136 from a third loop antenna 130 and a fourth signal 137 from a fourth loop antenna 131. The loop antennas 126-131 have different orientations relative to each other. The loop antennas 126-131 can be wound on a common core. For example, the loop antennas 126-130 can be wound across opposing flats of a hexagonal core, as described in more detail below with reference to FIG. 5. The first signal 132, the second signal 134, third signal 136, and/or the fourth signal 137 are associated with radio frequency signals from one or more radio sources 138, 140. For example, the radio source(s) 138, 140 can include an NDB, an AM radio transmission tower, etc.

In some examples, the first loop antenna 126, the second loop antenna 128, the third loop antenna 130, the fourth loop antenna 131, or some combination thereof can include, correspond to, or be included within an ADF, another appropriate computing device, or some combination thereof. In the same or alternative examples, the first loop antenna 126, the second loop antenna 128, the third loop antenna 130, the fourth loop antenna 131, or some combination thereof can be external to, and/or remote from, the computing device 102 and can communicate the first signal 132, the second signal 134, the third signal 136, the fourth signal 137, or some combination thereof to the computing device 102 via a communications link such as a coaxial cable.

In some examples, the computing device 102 includes one or more processors 106 coupled to a memory 108. The processor(s) 106 can be configured to receive the first signal 132 from the first loop antenna 126, the second signal 134 from the second loop antenna 128, the third signal 136 from the third loop antenna 130, and the fourth signal 137 from the fourth loop antenna 131.

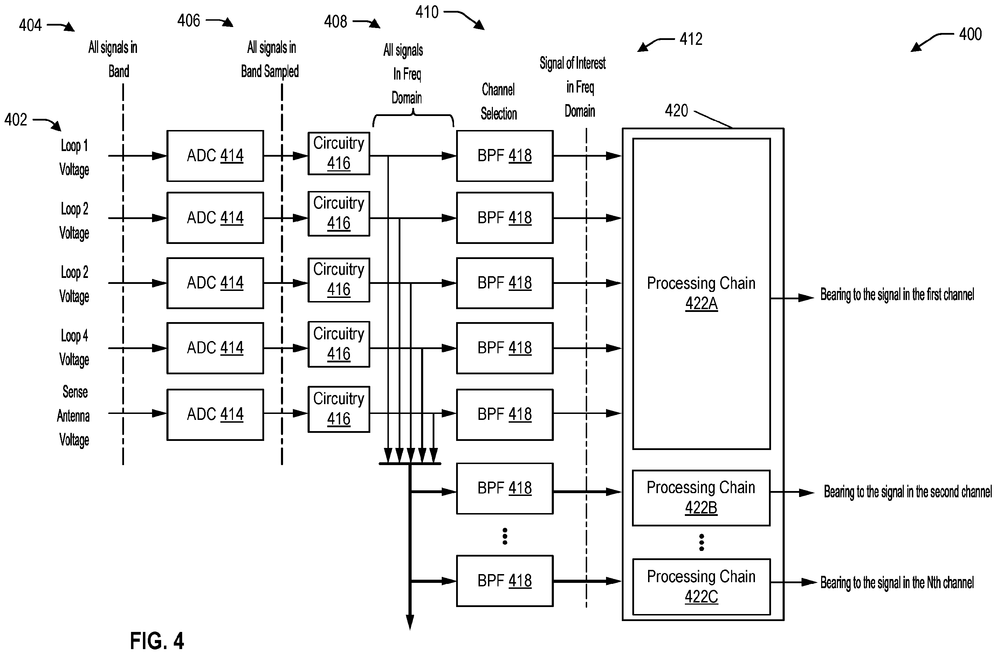

The processor(s) 106 can include one or more signal samplers 104, one or more signal converters 142, one or more bearing estimate generators 112, or some combination thereof. In some examples, the signal sampler(s) 104 can be configured to sample, over a frequency range associated with the radio sources 138, 140, the first signal 132 to generate a first digital signal 114, the second signal 134 to generate a second digital signal 116, the third signal 136 to generate a third digital signal 118, the fourth signal 137 to generate a fourth digital signal 119, or some combination thereof. The signal sampler(s) 104 can include, for example, one or more analog-to-digital converters configured to convert the received radio signal to a digital signal. For example, if the radio sources 138, 140 are NBDs or AM radio stations operating in the 190 kHz to 1.75 MHz band, the signal sampler(s) 104 can be configured to sample the entire 190 kHz to 1.75 MHz band at a sampling rate at least twice the bandwidth of interest. For a band of 190 kHz to 1.75 MHz, for example, the signal sampler(s) 104 can be configured to have a sampling rate of at least twice 1.75 MHz (i.e., 3.5 MHz). Sampling the digital signals can include the first digital signal 114, the second digital signal 116, the third digital signal 118, the fourth digital signal 119, or a combination thereof in a single sampled signal. The first digital signal 114, the second digital signal 116, the third digital signal 118, the fourth digital signal 119, or a combination thereof can be separated out in digital signal processing performed in one or more processing chains 422, as described in more detail below with reference to FIG. 4.

In some examples, the signal converter(s) 142 can be configured to convert the first digital signal 114, the second digital signal 116, the third digital signal 118, the fourth digital signal 119, or a combination thereof to a frequency domain representation. For example, the signal converter(s) 142 can be configured to perform a fast Fourier transform on the digital signals 114-119. In some examples, the signal sampler(s) 104 are configured to sample the signals 132-137 using a high enough sample rate to capture an entire bandwidth of interest, which can be referred to as the Nyquist frequency. The signal converter(s) 142 can then transform the digital signals 114-119 at once to generate the frequency domain representation 144. In some examples, the bandwidth of interest can be associated with an operating frequency range of the radio sources 138, 140 (e.g., 0.19-1.75 MHz). Source transmitter frequency data 124 can be included in a database stored at the memory 108 that can also include known locations of the radio sources 138, 140.

In some examples, the bearing estimate generator(s) 112 can be configured to generate, based on the frequency domain representation 144, a bearing estimate for each radio source 138, 140. As described in more detail below with reference to FIGs. 3 and 4, the bearing estimate generator(s) 112 can include one or more components to generate, based on the frequency domain representation 144, a first bearing estimate 120 associated with the first radio source 138, and a second bearing estimate 122 associated with the second radio source 140. In some examples, the processor(s) 106 can be configured to generate the plurality of bearing estimates 122 for each of the radio sources 138, 140 in a parallel processing operation.

In some examples, the system 100 can also include a sense antenna coupled to the processor(s) 106. The sense antenna can be a non-directional antenna with a sensitivity sufficient to enable differentiation of the relative phases of the loop antennas 126-130. The processor(s) 106 can be configured to receive a signal from the sense antenna and determine a relative phase between the first signal 132, the second signal 134, the third signal 136, and the fourth signal 137 received by the sense antenna and the phase of the first signal 132, the second signal 134, the third signal 136, and the fourth signal 137 received by the loop antennas.

In some examples, the processor(s) 106 are also configured to generate an overall bearing estimate for one or more of the radio sources 138, 140. In some examples, the overall bearing estimate can be derived by an average of the first bearing estimate 120 and the second bearing estimate 122 for the one or more of the radio sources 138, 140. In the same or alternative examples, the processor(s) 106 can be configured to employ other means of generating the overall bearing estimate. For example, the first bearing estimate 120 and the second bearing estimate 122 can be used to do a best fit to a sine wave corresponding to the expected distribution of amplitudes and phases for a wave arriving from a given angle. The phase of the sine wave that is a best fit can indicate the angle of arrival. If a particular loop antenna fails, the system 100 can detect and isolate the faulty measurement and still continue to produce a bearing measurement.

In some examples, the processor(s) 106 can also be configured to apply a fault detection operation, a fault exclusion operation, or some combination thereof to the plurality of bearing estimates 120, 122 for a radio source 138, 140. For example, a fault detection operation can be based on comparing two different measurements made using two different pairs of loop antennas. The resulting comparison can be compared to a fault detection threshold in order to detect a failure. If the comparison exceeds the fault detection threshold, there is a probable failure in one of the loop antennas (e.g., one or more of the first loop antenna 126, the second loop antenna 128, the third loop antenna 130) that causes inconsistent measurements.

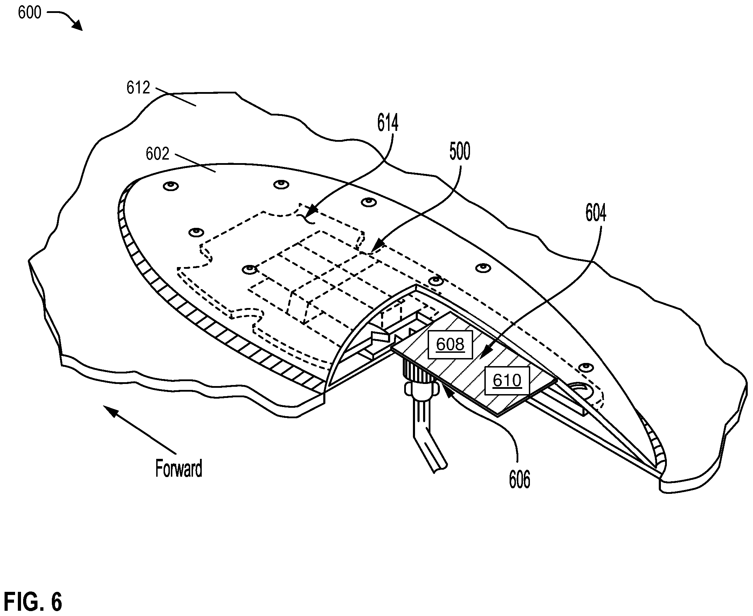

In some examples, the system 100 can be an integrated unit, as described in more detail below with reference to FIG. 6. In some examples, the integrated unit can be a system-on-chip.

Although FIG. 1 illustrates certain components of the system 100, more, fewer, and/or different components can be present without departing from the scope of the subject disclosure. For example, although four loop antennas 126-131 are illustrated, two, three, or more than four loop antennas can be present. An example implementing four loop antennas is described in more detail below with reference to FIGs. 3-5, 7, and 8. As another example, as noted above, the computing device 102 and the loop antennas 126-131 can be an integrated unit. As a further example, the memory 108 can include a database including known locations of the radio sources 138, 140.

In operation, the processor(s) 106 can receive the first signal 132, the second signal 134, the third signal 136, and the fourth signal 137 from the radio sources 138, 140. The amplitude of a particular received signal from a first source depends on an angle of arrival of the particular received signal. For example, for a simple sinusoidal source signal, the amplitude S(t) can be calculated using the formula below, where $\theta$ is the angle of arrival as measured from a plane of the loop of the antenna, $\omega$ is the frequency of the carrier, and $\varphi$ is an arbitrary phase of the carrier.

$$S(t) = A \cdot \sin(\theta) \sin(\omega t + \varphi)$$

In such a configuration, two crossed loops situated at 90 degrees can be used to determine the angle of arrival $\theta$. The amplitude of the two crossed loops, $S_1(t)$ and $S_2(t)$, can be calculated using the formulas below.

$$S_1(t) = A \cdot \sin(\theta) \sin(\omega t + \varphi)$$

$$S_2(t) = A \cdot \sin\left(\theta + \frac{\pi}{2}\right) \sin(\omega t + \varphi) = A \cdot \cos(\theta) \sin(\omega t + \varphi)$$

The processor(s) 106 can be configured to measure the amplitude of each signal and calculate the ratio of one signal to another, as shown in the formula below.

$$\frac{|S_1(t)|}{|S_2(t)|} = \frac{A \sin \theta}{A \cos \theta} = \tan \theta$$

The processor(s) 106 can be configured to then calculate an angle B associated with the angle of arrival $\theta$ using the formula below.

$$B = \tan^{-1}\left(\frac{|S_1(t)|}{|S_2(t)|}\right)$$

The angle $B$ is always a value in the range from 0 up to 180 degrees due to the presence of the absolute values in the division portion of the formulas. The angle of arrival $\theta$ is either the angle $B$ or $B+180$ degrees. A determination of whether the angle of arrival $\theta$ is $B$ or $B+180$ degrees may be determined based on a phase difference between the signal received from the first source by a sense antenna and the signals received from the first source by the loop antennas 126-130.

Although bearing estimates from the loop antennas can be used to generate an overall bearing estimate, adding additional bearing estimates from additional antennas enables additional functionality for an ADF. For example, the four-antenna example illustrated in FIG. 1 and the four-antenna examples illustrated in FIGs. 3-5 allow for an overdetermination of the overall bearing estimate, which can in turn enable fault detection, fault exclusion, additional functionality, or some combination thereof. Additional functionality can also be enabled by the sampling of the incoming radio signals over the entire frequency band of the radio sources 138, 140.

In some examples using four loop antennas A, B, C, and D arranged at increasing 45-degree angles from one another (e.g., as illustrated in FIG. 5), the signal amplitudes of the signals from a first source received from the four loop antennas (i.e., $S_A(t)$, $S_B(t)$, $S_C(t)$, and $S_D(t)$, respectively), can be described using the formulas below.

$$S_A(t) = A \cdot \sin(\theta)\sin(\omega t + \varphi)$$

$$S_B(t) = A \cdot \sin\left(\theta - \frac{\pi}{4}\right)\sin(\omega t + \varphi)$$

$$S_C(t) = A \cdot \sin\left(\theta - \frac{\pi}{2}\right)\sin(\omega t + \varphi) = A \cdot \cos(\theta)\sin(\omega t + \varphi)$$

$$S_D(t) = A \cdot \sin\left(\theta - \frac{3\pi}{4}\right)\sin(\omega t + \varphi) = A \cdot \cos\left(\theta - \frac{\pi}{4}\right)\sin(\omega t + \varphi)$$

Since the A and C loops form a first pair of perpendicular crossed loops, and the B and D loops form a second pair of perpendicular crossed loops, measurements from the four antennas can be made and the processor(s) 106 can be configured to average the overall bearing estimate provided by the two sets of perpendicular crossed loops, as illustrated in the formulas below, where $B_{AC}$ is an angle associated with an $\theta_{AC}$ for the A-C loop pair, $B_{BD}$ is an angle associated with an angle of arrival $\theta_{BD}$ for the B-D loop pair, and $\tilde{B}$ is an the average of the angles $B_{AC}$ of and $B_{BD}$.

$$B_{AC} = \tan^{-1}\left(\frac{|S_A(t)|}{|S_C(t)|}\right)$$

$$B_{BD} = \frac{\pi}{2} + \tan^{-1}\left(\frac{|S_B(t)|}{|S_D(t)|}\right)$$

$$\tilde{B} = \frac{B_{AC} + B_{BD}}{2} = \frac{\tan^{-1}\left(\frac{|S_A(t)|}{|S_C(t)|}\right) + \frac{\pi}{2} + \tan^{-1}\left(\frac{|S_B(t)|}{|S_D(t)|}\right)}{2}$$

The values for the various angles $B$ in the above three formulas are always values in the range from 0 up to 180 degrees due to the presence of the absolute values in the division portions of the formulas. A corresponding angle $\theta$ for one of the various angles $B$ is either value of the angle $B$ or $B+180$ degrees. A determination of whether the angle of arrival $\theta$ is $B$ or $B+180$ degrees may be determined based on a phase difference between the signal received from the first source by a sense antenna and the signals received from the first source by the loop antennas 126-130.

Using the multiple sets of bearing estimates from the multiple crossed pairs of loop antennas, the processor(s) 106 can generate a detection statistic $d$ based on a comparison of the multiple measurements, as illustrated in the formula below. If $d$ exceeds a fault detection threshold, the processor(s) 106 can be configured to generate an alert that, for example, there is a probable failure in one of the loops causing the measurements to be inconsistent. As noted above, other means of fault detection can also be used without departing from the scope of the subject disclosure.

$$d = |\theta_{AC} - \theta_{BD}|$$

In some examples, the system 100 can include a plurality of software-based receiver chains. In such examples, the computing device 102 can include a larger number of receivers in a smaller physical package. In certain configurations, the number of bearing measurements may only be limited to the processing and other computing resources of the computing device 102.

In some examples, the computing device 102 can be associated with, integrated into, or otherwise included in an aircraft, a portable electronic device such as a portable ADF, etc. The system 100 can also include components not illustrated in FIG. 1. For example, the computing device 102 can also include a receiver configured to receive the first signal 132, second signal 134, the third signal 136, or some combination thereof. The receiver can be configured to receive the data, for example, via a data bus such as an ARINC 429 bus. As an additional example, the system 100 can also include one or more input/output interfaces, one or more network interfaces, etc. Further, although FIG. 1 illustrates the memory 108 of the system 100 as storing certain data, more, fewer, and/or different data can be present within the memory 108 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the components of the signal sampler(s) 104, signal converter(s) 142, bearing estimate generator(s) 112, or some combination thereof. Such component(s) can be located remotely from the computing device 102 and accessed via a modem of the computing device 102.

Further, although FIG. 1 illustrates the processor(s) 106 and the memory 108 as integrated into a single computing device 102, other configurations are possible without departing from the scope of the subject disclosure. For example, the memory 108 can be stored as a separate data storage and integrated into a navigational computer, while the processor(s) 106 can be integrated into an ADF located remote from the navigational computer. As an additional example, one or more components of the computing device 102 can be distributed across a plurality of computing devices (e.g., a group of processor cores).

In addition to using two or more loop antennas as part of an ADF, the systems and methods disclosed herein can also be implemented as part of a multi-bearing position solution that can enable an aircraft to identify its geographic location based on a plurality of radio signals received from each of a plurality of radio sources 138, 140, as described in more detail below.

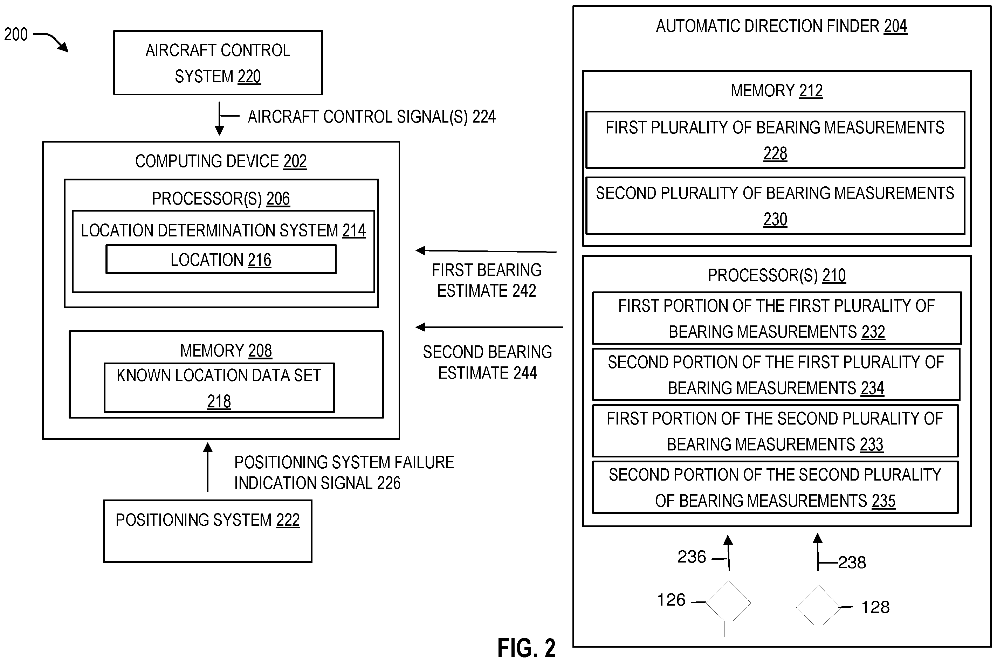

FIG. 2 depicts another example system 200 for automatic direction finding. In some examples, the system 200 includes a computing device 202 configured to receive a first bearing estimate 242 and a second bearing estimate 244 from an automatic direction finder 204, based at least one radio signals received from the radio sources 138, 140.

In some examples, the automatic direction finder 204 can include one or more processors 210 coupled to a memory 212. In some examples, the automatic direction finder 204 can also include a plurality of loop antennas, including the first loop antenna 126 and the second loop antenna 128, where each loop antenna is configured to receive radio signals from the plurality of radio sources 138, 140. As noted above with reference to FIG. 1, in some examples the automatic direction finder 204 can include more than two loop antennas. In some examples, the automatic direction finder 204 generally corresponds to the computing device 102 of FIG. 1.

The processor(s) 210 can be configured to receive a first signal 236 from the first loop antenna 126 and a second signal 238 from the second loop antenna 128. The processor(s) 210 can also be configured to generate a first plurality of bearing measurements 228 for the first signal 236 and generate a second plurality of bearing measurements 230 for the second signal 238. In some examples, the first plurality of bearing measurements 228 and the second plurality of bearing measurements 230 can be stored at the memory 212.

In some examples, the processor(s) 210 can be configured to generate a first portion 232 of the first plurality of bearing measurements 228 associated with radio signals received by the first loop antenna 126 from the first radio source 138, a second portion 234 of the first plurality of bearing measurements 228 associated with radio signals received by the first loop antenna 126 from the second radio source 140, a first portion 233 of the second plurality of bearing measurements 230 associated with radio signals received by the second loop antenna 128 from the first radio source 138, and a second portion 235 of the second plurality of bearing measurements 230 associated with radio signals received by the second loop antenna 128 from the second radio source 140.

In some examples, the processor(s) 210 can be configured to generate a first bearing estimate 242 associated with a first orientation of the automatic direction finder 204 relative to the first radio source 138 and communicate the first bearing estimate 242 to the computing device 202. The processor(s) 210 can also be configured to generate a second bearing estimate 244 associated with a second orientation of the automatic direction finder 204 relative to the second radio source 140 and communicate the second bearing estimate 244 to the computing device 202.

In some examples, the computing device 202 includes one or more processors 206 coupled to a memory 208. The processor(s) 206 can be configured to receive, from the automatic direction finder 204, the first bearing estimate 242 and the second bearing estimate 244.

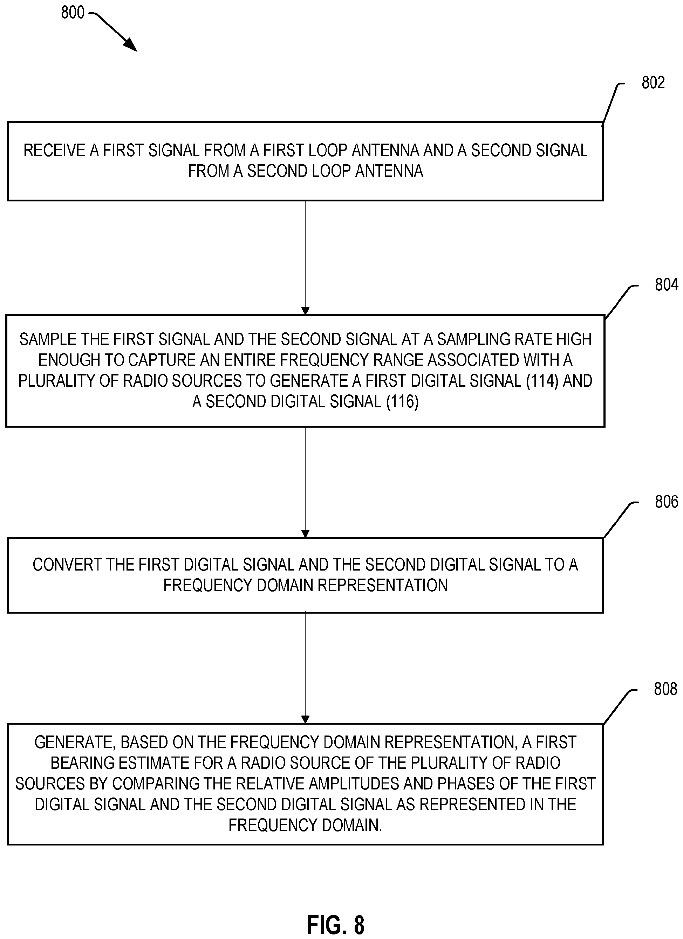

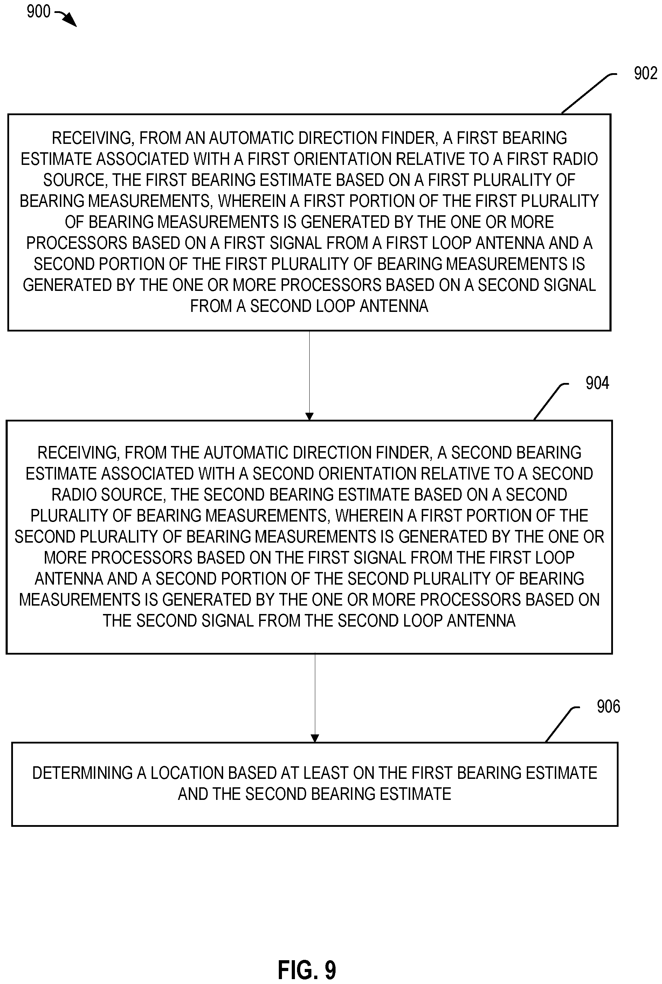

In some examples, the computing device 202 can include a location determination system 214 configured to determine a location 216 based at least on the first bearing estimate 242 and the second bearing estimate 244, as described in more detail below with reference to FIGs. 8 and 9.

In some examples, the system 200 can also include an aircraft control system 220 configured to communicate one or more aircraft control signals 224 to the computing device 202. For example, the aircraft control system 220 can include, be integrated into, or otherwise be a part of an aircraft's control system configured to generate aircraft control signal(s) 224 associated with a flight status of the aircraft, a control configuration for the aircraft, etc. As an example, the aircraft control signal(s) 224 can include one or more signals indicating a pilot's intention of switching to the ADF 204 for navigation instead of, or in addition to, alternative navigational tools such as GPS. In some examples, the processor(s) 206 can be configured to determine the location 216 responsive to the aircraft control system 220 of the aircraft.

In the same or alternative examples, the system 200 can also include a positioning system 222 communicatively coupled to the computing device 202. The positioning system 222 can include, for example, a GPS unit, inertial navigation device, or some combination thereof. In some examples, the positioning system 222 can be configured to communicate a positioning system failure indication signal 226 associated with a failure of the positioning system 222. For example, the positioning system failure indication signal 226 can include one or more signals indicative of a loss of satellite signals, power failure, computing failure, etc., associated with the positioning system 222. In some examples, the processor(s) 206 can be configured to determine the location 216 response to the positioning system failure indication signal 226 indicating a failure associated with the positioning system 222.

In some examples, the radio sources 138, 140 can be an NBD, AM radio sources, etc., as described in more detail above with reference to FIG. 1. In some examples, the processor(s) 206 can be configured to determine the location 216 based at least on a known location of the first radio source 138 and a known location of the second radio source 140. In some examples, the known locations of the radio sources 138, 140 can be stored as part of a known location data set 218 stored at the memory 208. In some examples, the known location of the first radio source 138 is a measure of a location of the first radio source 138 relative to a center of the Earth, the known location of the second radio source 140 is a measure of a location of the second radio source 140 relative to the center of the Earth, or some combination thereof, as described in more detail below with reference to FIG. 9.

In the same or alternative examples, the processor(s) 206 can be configured to determine the location of the aircraft based on an iterative process that an initial location and set known locations of the first radio source 138 and the second radio source 140. The initial location can include a last-known location of the aircraft or, a starting location, an arbitrary location, or any combination thereof. As described in more detail below with reference to FIG. 9, the iterative process can begin with the initial location and, through analysis of the first bearing estimate 242 and the second bearing estimate 244, determine the location of the aircraft.

In some examples, the computing device 202 can be associated with, integrated into, or otherwise included in an aircraft, a portable electronic device such as a portable ADF, etc. The system 200 can also include components not illustrated in FIG. 2. For example, the computing device 202 can also include a receiver configured to receive the first bearing estimate 242, the second bearing estimate 244, or some combination thereof. The receiver can be configured to receive the data, for example, via a data bus such as an ARINC 429 bus. As an additional example, the system 200 can also include one or more input/output interfaces, one or more network interfaces, etc. Further, although FIG. 1 illustrates the memory 208 of the system 200 as storing certain data, more, fewer, and/or different data can be present within the memory 208 without departing from the scope of the subject disclosure.

Additionally, although FIG. 2 illustrates certain operations occurring within the computing device 202, these operations can be performed by other components of the system 200 without departing from the scope of the subject disclosure. For example, one or more components external to the computing device 202 can be configured to host or otherwise incorporate the location determination system 214. Such component(s) can be located remotely from the computing device 202 and accessed via a modem of the computing device 202.

Further, although FIG. 2 illustrates the processor(s) 206 and the memory 208 as integrated into a single computing device 202, other configurations are possible without departing from the scope of the subject disclosure. For example, the memory 208 can be stored as a separate data storage and integrated into an aircraft navigational computer, while the processor(s) 206 can be integrated into an ADF located remote from the navigational computer. As an additional example, one or more components of the computing device 202 can be distributed across a plurality of computing devices (e.g., a group of processor cores).

Although FIG. 2 only illustrates the system 200 as using two loop antennas 126, 128, more can be used without departing from the scope of the subject disclosure. For example, the automatic direction finder 204 can include and/or receive radio signals from four loop antennas as illustrated in FIGs. 1 and 3-5, or any plurality of loop antennas. The use of the plurality of loop antennas, the plurality of bearing estimates from each of the loop antennas, where a portion of each plurality of bearing estimates is associated with a particular radio source, enables functionality of the automatic direction finder 204, the computing device 202, and the system 200, as described further below.

FIG. 3 illustrates another example system 300 for automatic direction finding. The example system 300 includes one or more processors 328 coupled to loop antennas 302A, 302B, 302C, 302D. The loop antennas 302A-D may be wound across flats of a common, octagonal core. The processor(s) 328 are configured to process radio signals incoming from the loop antennas 302A-D. The processor(s) 328 generally correspond to the processor(s) 106 of FIG. 1, the processor(s) 210 of FIG. 2, or some combination thereof.

In some examples, each of the loop antennas 302A-D is coupled to a respective matching network 312A-D and matched amplifier 322A-D. After amplification, a radio signal is communicated to a respective analog-to-digital converter (ADC) 326A-D before being communicated to the processor(s) 328. In some examples, the processor(s) 328 can be configured to provide gain control to the amplifiers 322A-D to provide better conditioning of the incoming radio signals. In some examples, the processor(s) 328 and ADCs 326A-D are driven by a common clock 324. The system 300 can also include a sense antenna 310 that is coupled to the processor(s) 328 via a matching network 320, an amplifier 334, and an ADC 336. The sense antenna 310 allows a bearing estimate to be determined in a 360-degree range relative to an orientation associated with the loop antennas 302A-D when the formulas described above are utilized.

In some examples, the processor(s) 328 can be configured to provide output to a connector 330 for further communication to other examples of an automatic direction finding system (e.g., to the signal sampler(s) 104, the bearing estimate generator(s) 112 of FIG. 1, or some combination thereof). The system 300 can also include power circuitry 332 configured to provide additional signal conditioning, power distribution, other appropriate power-related functionality, or some combination thereof, to the output.

In operation, the system 300 receives radio signals from the four loop antennas 302A-D arranged at increasing 45-degree angles from one another, as described in more detail below with reference to FIG. 4. In the illustrative example of FIG. 3, a frequency range of the ADF receiver is from 190 kHz to 1.75 MHz, direct analog-to-digital conversion can be used with a modest sampling rate (e.g., 4 mega samples per second) and still be above the Nyquist sampling rate T, and translation of the signal to baseband expressed as in-phase and quadrature components can be done during digital processing. All five channels of digitized RF signals corresponding to the signals received by the four loop antennas 302A-D and the sense antenna 310 are provided to the processor(s) 328. The system 300 is configured to digitize the incoming radio signals immediately and process digital signals.

Although FIG. 3 illustrates certain components in a particular configuration, the system 300 can include more, fewer, and/or different components without departing from the scope of the subject disclosure. For example, the processor(s) 328 can include multiple processors for different tasks. In a particular configuration, for example, a field-programmable gate array (FPGA) can be included to support the digital signal processing and a separate processor can be configured to handle the input/output and other maintenance-type functionality.

FIG. 4 illustrates an example system 400 for automatic direction finding. The system 400 can include one or more processors 420 configured to receive a plurality of voltage signals 402 corresponding to a respective radio signal received by antennas (e.g., the loop antennas 302A-D and the sense antenna 310 of FIG. 3).

In some examples, each of the plurality of voltage signals 402 can be converted to a digital signal via a respective ADC 414. As illustrated in FIG. 4, the voltage signals 402 include all signals received over the frequency range associated with the radio sources (e.g., the radio sources 138, 140 of FIGs. 1 and 2), as illustrated at stage 404. The system 400 can be configured to sample the signals at the ADCs 414 across the entire frequency range of the radio signals associated with the radio source(s), as illustrated at stage 406. The system 400 can also be configured to transform the digital signals output from the ADCs 414 into the frequency domain. For example, the system 400 can include circuitry 416 configured to perform a fast Fourier transform (FFT) on each of the digital signals output from the ADCs 414. As illustrated at stage 408, in some examples, the transformed digital signals can be separated into one or more data streams for parallel processing. In some examples, the FFT circuitry 416 can include one or more components of a processor (e.g., the processor(s) 106 of FIG. 1, the processor(s) 206 of FIG. 2, the processor(s) 420, etc.) executing instructions that cause the one or more components of the processor(s) to transform the digital signals output from the ADCs 414 into the frequency domain.

The system 400 can also be configured to apply a respective bandpass filter (BPF) 418 in the frequency domain to the frequency domain digital signals from the FFT circuitry 416. As illustrated at stage 410, the BPFs 418 can operate to select one or more channels of interest across the frequency range. For example, a particular BPF 418 can select a portion of the frequency range associated with a known transmission frequency of a radio source (e.g., the radio sources 138, 140 of FIGs. 1 and 2). As noted at stage 408, the transformed digital signals can be provided to a plurality of processing streams for parallel processing. In such a configuration, a plurality of BPFs 418 can be applied to select multiple portions of interest of a radio frequency range.

The processor(s) 420 can be configured to receive the signals of interest in the frequency domain, as illustrated at stage 412. The processor(s) 420 can be configured to determine amplitude and phase of the radio signals received by the plurality of loop antennas of an ADF, as described in more detail above with reference to FIG. 1. The processor(s) 420 can be configured to estimate a direction of arrival associated with each of the radio signals and generate a plurality of bearing estimates, as described in more detail above with reference to FIGs. 1 and 2. In some examples, the processor(s) 420 can also be configured to perform additional functionality. For example, the processor(s) 420 can be configured to perform additional processing for a radio source that is an NBD transmitter, such as Morse Code demodulation. Similarly, the processor(s) 420 can be configured to perform demodulation of an AM radio signal to recover the audio signal.

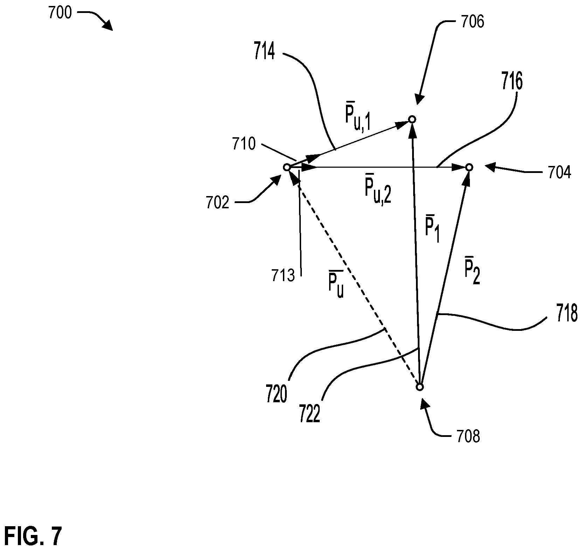

In some examples, the processor(s) 420 can be configured to implement a plurality of processing chains 422. Each of the plurality of processing chains can be configured to generate a bearing estimate in a respective channel of interest. For example, the processing chain 422A can be configured to generate a bearing estimate associated with a first channel associated with a first radio source, the processing chain 422B can be configured to generate a bearing estimate associated with a second channel associated with a second radio source, and so on until the processing chain 422C can be configured to generate a bearing estimate associated with an Nth channel associated with an Nth radio source. A channel can be associated with a particular radio source (e.g., the radio sources 138, 140 of FIG. 1). For example, a first channel can be associated with a first radio source and a second channel can be associated with a second radio source. As described in more detail above with reference to FIG. 2 and below with reference to FIGs. 7-9, the plurality of bearing estimates can be used to generate an estimate of the current position of an aircraft.

In the illustrative example of FIG. 4, the system 400 analyzes voltage signals 402 from four loop antennas and a sense antenna (e.g., as described in more detail below with reference to FIG. 5). The voltage signals are sampled, transformed, and filtered for signals in N channels. The number of channels (and the associated quantity of processing chains 422 and associated components such as BPFs 418) can depend on the particular example of the system 400. For example, the number of channels can be selected based on a highest number of expected radio sources for a given operation, the processing resources available to the system 400, the fault detection requirements of a particular configuration, etc., or some combination thereof. Additionally, although FIG. 4 illustrates five voltage signals 402, more, fewer, and/or different voltage signals 402 can be present without departing from the scope of the subject disclosure. For example, the system 400 can be configured to process voltage signals 402 associated with three or five or more loop antennas.

The above-described systems 300, 400 have described example operations using voltage signals output from four loop antennas arranged in increasing 45-degree angles from one another. An example of this arrangement of four loop antennas is described in more detail below with reference to FIG. 5.

FIG. 5 illustrates an example antenna 500. The antenna 500 includes a core 502, a first loop antenna 504A that includes first conductive loops 506 around the core 502, a second loop antenna 504C that includes second conductive loops 510 formed around the core 502 at a first angle relative to the first conductive loops 506, a third loop antenna 504B that includes third conductive loops 514 around the core 502 at a second angle relative to the first loop antenna 504A, and a fourth loop antenna 504D that includes a fourth conductive loop 518 formed around the core 502 at a third angle relative to the third loop antenna 504B.

In the example of FIG. 5, the first angle is substantially ninety degrees, the second angle is substantially forty-five degrees, and the third angle is substantially ninety degrees. The angles between the loop antennas can also be described relative to a y-axis 503 at a center of the core 502. For example, the first loop antenna 504A can be positioned at an angle of zero degrees relative to the y-axis 503, the third loop antenna 504B can be positioned at an angle of forty-five degrees in a clockwise direction relative to the y-axis 503, the second loop antenna 504C can be positioned at an angle of ninety degrees in the clockwise direction relative to the y-axis 503, and the fourth loop antenna 504D can be positioned at an angle of one hundred thirty-five degrees in the clockwise direction relative to the y-axis 503. Although FIG. 5 illustrates four loop antennas 504A-504D, other configurations of three or more loop antennas are possible without departing from the scope of the subject disclosure. For example, the antenna 500 can include three loop antennas 504A-504C arranged at sixty-degree angles relative to one another.

In some examples, the core 502 of the antenna 500 can be octagonal or substantially octagonal to accommodate two pairs of crossed-loop antennas (or a total of four loop antennas). The loop antennas 504A-D can be wound around a core that includes ferrite to increase an effective electrical size of the loop antennas 504A-D. For example, the core 502 can include ferrite to increase the effective electrical size of the antenna 500.

In some examples, the antenna 500 can also include a sense antenna, as described in more detail above with reference to FIGs. 1-4, and illustrated below with reference to FIG. 6. In some examples, the antenna 500 can also include a first matching network coupled to the first loop antenna 504A, a second matching network coupled to the second loop antenna 504C, a third matching network coupled to the third loop antenna 504B, a fourth matching network coupled to the fourth loop antenna 504D, or some combination thereof, as described in more detail above with reference to FIGs. 4 and 5.

As described in more detail above with reference to FIGs. 1-5, a system can be configured to estimate an angle of arrival 520 of a radio signal 522 incoming to the antenna 500. The two crossed-loop pairs of loop antennas (e.g., the crossed loop antenna pair 504A, 504C and the crossed loop antenna pair 504B, 504D) illustrated in FIG. 5 can enable additional ADF functionality such as fault detection and correction.

Although the antenna 500 includes two crossed loop antenna pairs, any number of crossed loop antenna pairs greater than two could be included without departing from the scope of the subject disclosure. Any number of loops greater than two can generate redundant measurements that can be used for measurement noise reduction and fault detection.

Further, although the antenna 500 illustrates a substantially octagonal core 502, other shapes are possible without departing from the scope of the subject disclosure. For example, if the antenna 500 includes three loop antennas, the core 502 can be hexagonal or substantially hexagonal. Generally, the core 502 is a regular polygon with 2*N sides, where N is the number of loop antennas.

In some examples, the antenna 500 can be included within, incorporated into, or otherwise associated with an ADF device. FIG. 6 illustrates an example device 600 for automatic direction finding. The device 600 includes a housing 602, an antenna 500 contained within the housing 602, an electronics unit 604 contained within the housing 602 and coupled to the antenna 500, and an interface 606 contained within the housing 602 and coupled to the electronics unit 604.

The electronics unit 604 includes a receiver 608 configured to receive a first signal from the first loop antenna 504A of FIG. 5 and a second signal from the second loop antenna 504C. The electronics unit 604 can also include one or more software-defined radio components 610 configured to process signals associated with the first loop and the second loop. The software-defined radio components 610 can include some or all of the functionality described in more detail above with reference to FIGs. 3 and 4. In some examples, the device 600 can also include a sense antenna 614 coupled to the electronics unit 604.

The interface 606 can be configured to enable data transfer from the electronics unit 604 to a second device external to the housing 602. For example, the interface 606 can be configured to enable data transfer of the first bearing estimate 242 and the second bearing estimate 244 of FIG. 2 to the computing device 202 for further processing, display by a display device, or both. In some examples, the interface 606 includes an ARINC 429 interface.

In some examples, the device 600 can be integrated into, incorporated with, or otherwise installed into a portion 612 of an aircraft. For example, the device 600 can be attached to an outer surface of the aircraft to facilitate reception of radio signals from radio sources (e.g., the radio sources 138, 140 of FIG. 1). In a particular configuration, the device 600 can be installed such that the loop antenna 504A is facing a forward direction associated with the normal forward direction of the aircraft.

FIG. 7 illustrates an example determination 700 of an ADF's location. Certain traditional methods for solving multiple bearing position fixes are performed in a two-dimensional space (e.g., latitude/longitude) space with corrections and compensations to account for a non-flat Earth. The systems and methods disclosed herein enable an alternative three-dimensional, vector-based approach. Certain other approaches, such as a spherical geometry-based approach, can be more complex to the vector-based approach, and can involve approximations that can limit performance in certain situations (e.g., very high latitudes, etc.).

The example determination 700 illustrates an unknown position 702 of an aircraft relative to a known position 706 of a first radio source, a known position 704 of a second radio source, and the known position 708 of the center of the Earth. The determination 700 includes unit vectors 710, 713 pointing from the unknown position 702 to the known positions 706, 704, respectively.

As described above with reference to FIGs. 1-6, the system can take bearing measurements from a plurality of loop antennas. One or more processors (e.g., the processor(s) 106 of FIG. 1, the processor(s) 206 of FIG. 2, or some combination thereof) can be configured to model each bearing measurement as a unit vector 710, 713 pointing from the unknown position 702 ($P_u = [x\ y\ z]$) to a known position 706, 704 ($P_i$). The vectors 722, 718 from the known position 708 of the center of the Earth to the known positions 706, 704, respectively, can be known. For example, the known positions 704, 706, 708 can be stored in a memory (e.g., the memory 108 of FIG. 1) as latitude and longitude values.

As a simplified example, if the height of the known position 704, 706 are assumed to be the same as the height of the unknown position 702, the unknown position 702 in an Earth-centered, Earth-fixed (ECEF) coordinate system can be illustrated by the vector 720 ($\overline{P_u}$). The vector 720 is related to a known position of an $i^{th}$ radio source ($\overline{P_i}$) by the expression below, where $\overline{P_{u,i}}$ are vectors from the unknown location 702 to known positions 706, 704 (e.g., the vectors 714, 716) and $\overline{P_i}$ are vectors from the known location 708 to the known position 706, 704 (e.g., the vectors 722, 718), where:

$$\overline{P_u} + \overline{P_{u,i}} = \overline{P_i}$$

The processor(s) can be configured to estimate the direction of the vector 720 by measuring the direction of arrival of radio signals from the radio sources as known positions 704, 706. If the unit vector 710 ($\widehat{n_1}$) is a unit vector pointing from the unknown position 702 to the known position 706 considering the direction of arrival of radio signals from the known position 706, and the unit vector 713 ($\widehat{n_2}$) is a unit vector pointing from the unknown position 702 to the known position 704 considering the direction of radio signals from the known position 704, the vector 720 can be expressed by the formula below, where $R_i$ is the magnitude of the vector 720 and unknown:

$$\overline{P_{u,i}} = \widehat{n_i} R_i$$

For any observation, $\overline{P_i} - \overline{P_u} - \widehat{n_i} R_i = 0$. Expanding this relationship into individual x, y, and z coordinate components gives the following three equations:

$$\overline{P_{i,x}} - \overline{P_{u,x}} - \widehat{n_{i,x}} R_i = 0$$

$$\overline{P_{i,y}} - \overline{P_{u,y}} - \widehat{n_{i,y}} R_i = 0$$

$$\overline{P_{i,z}} - \overline{P_{u,z}} - \widehat{n_{i,z}} R_i = 0$$

The above equations include four unknowns-three unknown user position states and an unknown vector magnitude. Each bearing measurement adds an additional unknown. Two bearing measurements can, for example, give the six equations below:

$$\overline{P_{1,x}} - \overline{P_{u,x}} - \widehat{n_{1,x}} R_i = 0$$

$$\overline{P_{1,y}} - \overline{P_{u,y}} - \widehat{n_{1,y}} R_i = 0$$

$$\overline{P_{1,z}} - \overline{P_{u,z}} - \widehat{n_{1,z}} R_i = 0$$

$$\overline{P_{2,x}} - \overline{P_{u,x}} - \widehat{n_{2,x}} R_i = 0$$

$$\overline{P_{2,y}} - \overline{P_{u,y}} - \widehat{n_{2,y}} R_i = 0$$

$$\overline{P_{2,z}} - \overline{P_{u,z}} - \widehat{n_{2,z}} R_i = 0$$

The unknowns can be gathered and rearranged into a matrix form, as illustrated below:

$$\begin{bmatrix} 1 & 0 & 0 & \widehat{n_{1,x}} & 0 \\ 0 & 1 & 0 & \widehat{n_{1,y}} & 0 \\ 0 & 0 & 1 & \widehat{n_{1,z}} & 0 \\ 1 & 0 & 0 & 0 & \widehat{n_{2,x}} \\ 0 & 1 & 0 & 0 & \widehat{n_{2,y}} \\ 0 & 0 & 1 & 0 & \widehat{n_{2,z}} \end{bmatrix} \begin{bmatrix} P_{u,x} \\ P_{u,y} \\ P_{u,z} \\ R_1 \\ R_2 \end{bmatrix} = \begin{bmatrix} P_{1,x} \\ P_{1,y} \\ P_{1,z} \\ P_{2,x} \\ P_{2,y} \\ P_{2,z} \end{bmatrix} = H\bar{x} = \bar{y}$$

With six equations and five unknowns, the system can be solved using the generalized pseudo-inverse: $\bar{x} = (H^T H)^{-1} H^T \bar{y}$. The formulation above can be extended to accommodate additional bearing measurements. Each new bearing measurement adds three rows and one column to the **H** matrix. The first three columns of the added rows are always an identity matrix. The added column is all zeros except for the three rows that include the elements of the unit vectors. All other rows and columns are set to zero. As long as there are at least as many or more formulas than unknowns, the system can be solved. One of ordinary skill in the art would recognize how to extend the matrix representation of the linear system of equations to accommodate additional bearing measurements. For example, if a third bearing measurement is available, the system of equations express in matrix form would be:

$$\begin{bmatrix} 1 & 0 & 0 & \widehat{n_{1,x}} & 0 & 0 \\ 0 & 1 & 0 & \widehat{n_{1,y}} & 0 & 0 \\ 0 & 0 & 1 & \widehat{n_{1,z}} & 0 & 0 \\ 1 & 0 & 0 & 0 & \widehat{n_{2,x}} & 0 \\ 0 & 1 & 0 & 0 & \widehat{n_{2,y}} & 0 \\ 0 & 0 & 1 & 0 & \widehat{n_{2,z}} & 0 \\ 1 & 0 & 0 & 0 & 0 & \widehat{n_{3,x}} \\ 0 & 1 & 0 & 0 & 0 & \widehat{n_{3,y}} \\ 0 & 0 & 1 & 0 & 0 & \widehat{n_{3,z}} \end{bmatrix} \begin{bmatrix} P_{u,x} \\ P_{u,y} \\ P_{u,z} \\ R_1 \\ R_2 \\ R_3 \end{bmatrix} = \begin{bmatrix} P_{1,x} \\ P_{1,y} \\ P_{1,z} \\ P_{2,x} \\ P_{2,y} \\ P_{2,z} \\ P_{3,x} \\ P_{3,y} \\ P_{3,z} \end{bmatrix} = \boldsymbol{H}\bar{x} = \bar{y}$$

In some examples, the angle of arrival measurements are actually generated in an aircraft body coordinate frame and the processor(s) can transform these measurements into ECEF coordinates. Transformation can be done from the aircraft reference frame to the local level reference frame using the pitch, roll, and heading of the aircraft. The vector can then be translated from the local level to ECEF. This transformation requires an estimate of the latitude, longitude, and altitude of the origin of the local level body frame in order to do the transformation. The processor(s) can be configured to perform computations with the best available estimate of the aircraft position to get a new estimate of the position. The process can be iterated until a difference between a new estimate and a last estimate satisfies a position estimation accuracy threshold.

FIG. 8 is a flow chart of an example method 800 for automatic direction finding. The method 800 can be initiated, performed, or controlled by one or more processors executing instructions, such as by the processor(s) 106 of FIG. 1 executing instructions from the memory 108, the processor(s) 206 of FIG. 2 executing instructions from the memory 208, the processor(s) 210 executing instructions from the memory 212, or a combination thereof.

In some examples, the method 800 includes, at block 802, receiving a first signal from a first loop antenna and a second signal from a second loop antenna. For example, the processor(s) 106 of FIG. 1 can receive the first signal 132 from the first loop antenna 126 and the second signal 134 from the second loop antenna 128.

The method 800 also includes, at block 804, sampling the first signal and the second signal at a sampling rate high enough to capture an entire frequency range associated with a plurality of radio sources to generate a first digital signal and a second digital signal. For example, the processor(s) 106 of FIG. 1 can sample the first signal 132 and the second signal 134 to generate the first digital signal 114 and the second digital signal 116.

The method 800 also includes, at block 806, converting the first digital signal and the second digital signal to a frequency domain representation. For example, the processor(s) 106 of FIG. 1 can convert the first digital signal 114 and the second digital signal 116 to the frequency domain representation 144.

The method 800 also includes, at block 808, generating, based on the frequency domain representation, a first bearing estimate for a radio source of the plurality of radio sources by comparing the relative amplitudes and phases of the signals as represented in the frequency domain. For example, the processor(s) 106 of FIG. 1 can generate, based on comparing the relative amplitude and phases of the frequency domain representations 144, the first bearing estimate 120 for the radio source 138.

In some examples, the method 800 can include more, fewer, and/or different steps without departing from the scope of the subject disclosure. For example, the method 800 can also include applying a fault detection operation, a fault exclusion operation, or both, to the plurality of bearing estimates 120, 122 of FIG. 1. As another example, the method 800 can also include generating an overall bearing estimate for a radio source of the one or more radio sources, wherein the overall bearing estimate includes an average of the plurality of the first and second bearing estimates 120, 122 for the radio source 138, 140.

FIG. 9 is a flow chart of an example method 900 for automatic direction finding. The method 900 can be initiated, performed, or controlled by one or more processors executing instructions, such as by the processor(s) 106 of FIG. 1 executing instructions from the memory 108, the processor(s) 206 of FIG. 2 executing instructions from the memory 208, the processor(s) 210 executing instructions from the memory 212, or a combination thereof.

In some examples, the method 900 includes, at block 902, receiving, from an automatic direction finder, a first bearing estimate associated with a first orientation relative to a first radio source, wherein the first bearing estimate is based on a first plurality of bearing estimates, and wherein a first portion of the first plurality of bearing estimates is generated by the one or more processors based on a first signal from a first loop antenna and a second portion of the first plurality of bearing estimates is generated by the one or more processors based on a second signal from a second loop antenna. For example, the processor(s) 206 of FIG. 2 can receive, from the automatic direction finder 204, the first bearing estimate 242 associated with a first orientation relative to a first radio source 138, the first bearing estimate 242 based on the first plurality of bearing measurements 228, wherein a first portion 232 of the first plurality of bearing measurements 228 is generated by the processor(s) 210 based on the first signal 236 from the first loop antenna 126 and a second portion 234 of the first plurality of bearing measurements 228 is generated by the processor(s) 210 based on the second signal 238 from the second loop antenna 128.

In the example of FIG. 9, the method 900 also includes, at block 904, receiving, from the automatic direction finder, a second bearing estimate associated with a second orientation relative to a second radio source, wherein the second bearing estimate is based on a second plurality of bearing estimates, and wherein a first portion of the second plurality of bearing estimates is generated by the one or more processors based on the first signal from the first loop antenna and a second portion of the second plurality of bearing estimates is generated by the one or more processors based on the second signal from the second loop antenna. For example, the processor(s) 206 of FIG. 2 can receive, from the automatic direction finder 204, the second bearing estimate 244 associated with a second orientation relative to the second radio source 140, the second bearing estimate 244 based on the second plurality of bearing estimates 230, wherein a first portion 233 of the second plurality of bearing estimates 230 is generated by the processor(s) 210 based on the first signal 236 from the first loop antenna 126 and a second portion 235 of the second plurality of bearing estimates 230 is generated by the processor(s) 210 based on the second signal 238 from the second loop antenna 128.

In the example of FIG. 9, the method 900 also includes, at block 906, determining a location based at least on the first bearing estimate and the second bearing estimate. For example, the processor(s) 206 of FIG. 2 can determine the location 216 based at least on the first bearing estimate 242 and the second bearing estimate 244.

In some examples, the method 900 can include more, fewer, and/or different steps without departing from the scope of the subject disclosure. For example, the method 900 can also receive, from the automatic direction finder a third bearing estimate associated with a third orientation relative to a third radio source, and determine the location based at least on the first bearing estimate, the second bearing estimate, and the third bearing estimate.

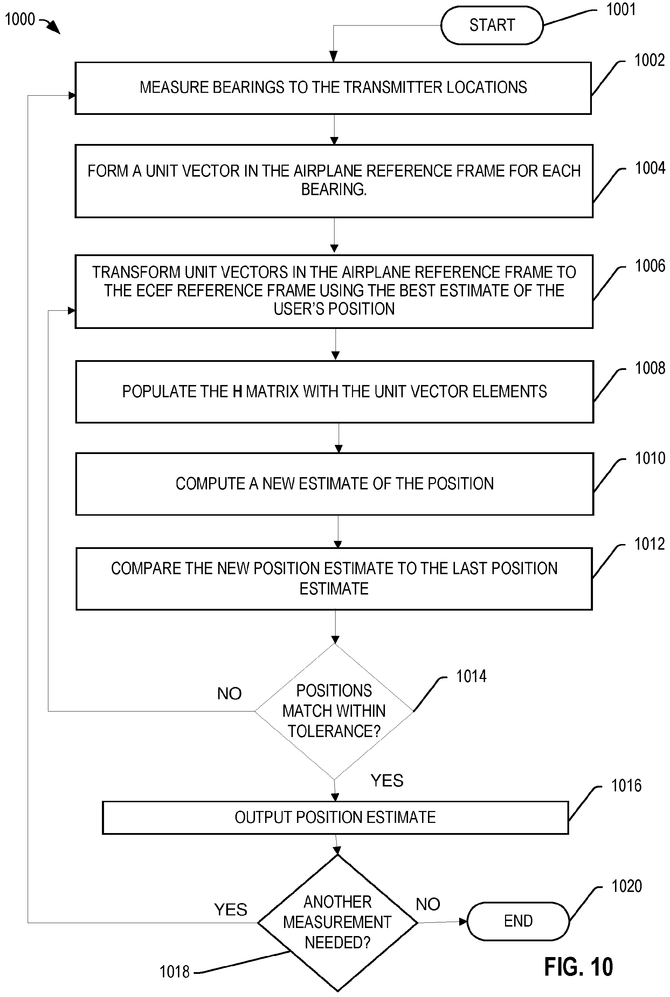

FIG. 10 is a flow chart of an example method 1000 for position estimation. The method 1000 can be initiated, performed, or controlled by one or more processors executing instructions, such as by the processor(s) 106 of FIG. 1 executing instructions from the memory 108, the processor(s) 206 of FIG. 2 executing instructions from the memory 208, the processor(s) 210 executing instructions from the memory 212, or a combination thereof. In some examples, the method 1000 illustrates the example determination 700 of FIG. 7. In some examples, the method 1000 can be initiated, performed, or controlled starting at block 1001.

In some examples, the method 1000 includes, at block 1002, measuring bearings to the transmitter locations. For example, as described in more detail above with reference to FIGs. 1 and 2, the processor(s) 106, 206 can generate bearing measurements (e.g., the first plurality of bearing measurements 228 and/or the second plurality of bearing measurements 230 of FIG. 2) to the radio sources 138, 140 of FIG. 1. In some examples, the bearing measurements can be taken at an angle $\theta_i$ from the nose of an aircraft on which the ADF is installed to each emitter.

In some examples, the method 1000 includes, at block 1004, forming a unit vector in the airplane reference frame for each bearing measurement. For example, as described above with reference to FIG. 7, the processor(s) 106, 206 of FIGs. 1 and 2 can be configured to form the unit vectors 710, 713 in the airplane reference frame.

In some examples, the method 1000 includes, at block 1006, transforming unit vectors in the airplane reference frame to the ECEF reference frame using the best estimate of the user's position. For example, the processor(s) 106, 206 of FIGs. 1 and 2 can be configured to transform the unit vectors 710, 713 of FIG. 7 to the ECEF reference frame using a best estimate of the aircraft's position.

In some examples, the method 1000 includes, at block 1008, populating the **H** matrix with the unit vector elements. For example, as described in more detail above with reference to FIG. 7, the processor(s) 106, 206 of FIGs. 1 and 2 can populate the **H** matrix with the unit vector elements. The method 1000 also includes, at 1010, computing a new estimate of the position. For example, as described in more detail above with reference to FIG. 7, the processor(s) 106, 206 of FIGs. 1 and 2 can compute a new position estimate.

In some examples, the method 1000 includes, at block 1012, comparing the new position estimate to the last position estimate. For example, the processor(s) 106, 206 of FIGs. 1 and 2 can compare the new position estimate to a last position estimate. In some examples, as described above with reference to FIG. 7, the method 1000 can be an iterative process.

In some examples, the method 1000 includes, at block 1014, determining whether the new position estimate and the last position estimate match within a tolerance. For example, as described in more detail above with reference to FIG. 7, the processor(s) 106, 206 of FIGs. 1 and 2 can determine whether the new position estimate and the last position estimate match within the position estimation accuracy threshold.

If the positions match within the tolerance, the method 1000 includes, at block 1016, outputting the new position estimate. For example, the processor(s) 106, 206 of FIGs. 1 and 2 can output the position estimate. The method 1000 can then include, at block 1018, determining whether another measurement is needed. For example, the processor(s) 106, 206 of FIGs. 1 and 2 can determine whether another measurement is needed. If another measurement is needed, the method 1000 can return to block 1002 where the method 1000 can continue to find an estimate for a new position. If another measurement is not needed, the method 1000 can proceed to block 1020 where, in some examples, the method 1000 can end. Referring again to block 1014, if the positions do not match within the tolerance, the method 1000 can return to block 1006, where the method 1000 can continue to iterate to identify an acceptable position estimate.

In some examples, the method 1000 can include more, fewer, and/or different steps without departing from the scope of the subject disclosure. For example, the method 1000 can combine steps of the method 1000 (e.g., blocks 1008, 1010) without departing from the scope of the subject disclosure.

The methods described above with reference to FIGs. 1-10 can be implemented to realize one or more of the technical advantages described in more detail above. For example, the methods 800, 900, 1000 can enable an automatic direction finder with improved capabilities (e.g., fault detection) in a smaller physical size than certain traditional ADFs.

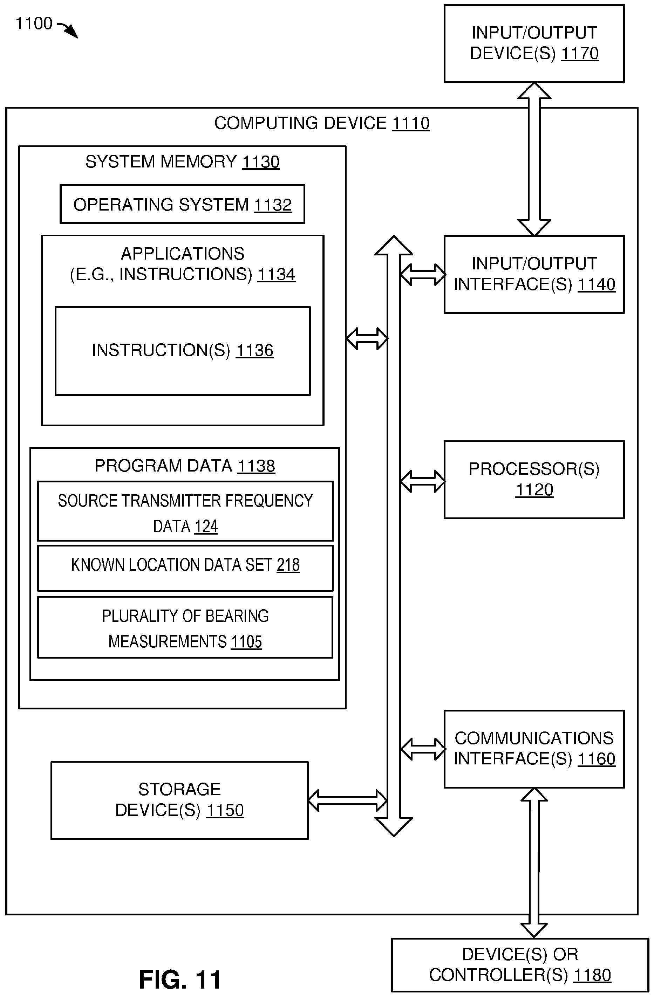

FIG. 11 is a block diagram of a computing environment 1100 including a computing device 1110 configured to support examples of computer-implemented methods and computer-executable program instructions (or code). For example, the computing device 1110, or portions thereof, is configured to execute instructions to initiate, perform, or control one or more operations described in more detail above with reference to FIGs. 1-9. In some examples, the computing device 1110 can include, correspond to, or be included within the computing device 102 of FIG. 1, the computing device 202 of FIG. 2, the automatic direction finder 204 of FIG. 2, components of the system 300 of FIG. 3, components of the system 400 of FIG. 4, one or more servers, one or more virtual devices, or a combination thereof.

The computing device 1110 includes one or more processors 1120. In some examples, the processor(s) 1120 correspond to the processor(s) 106 of FIG. 1, the processor(s) 206 of FIG. 2, the processor(s) 210 of FIG. 2, or some combination thereof. The processor(s) 1120 are configured to communicate with system memory 1130, one or more storage devices 1150, one or more input/output interfaces 1140, one or more communications interfaces 1160, or any combination thereof. The system memory 1130 includes volatile memory devices (e.g., random access memory (RAM) devices), nonvolatile memory devices (e.g., read-only memory (ROM) devices, programmable read-only memory, and flash memory), or both. The system memory 1130 stores an operating system 1132, which can include a basic input/output system for booting the computing device 1110 as well as a full operating system to enable the computing device 1110 to interact with users, other programs, and other devices. The system memory 1130 stores system (program) data 1138, such as the source transmitter frequency data 124 of FIG. 1, the known location data set 218 of FIG. 2, a plurality of bearing measurements 1105 (including, for example, the first plurality of bearing measurements 228 and the second plurality of bearing measurements 230 of FIG. 2), or a combination thereof.

The system memory 1130 includes one or more applications 1134 (e.g., sets of instructions) executable by the processor(s) 1120. For example, the one or more applications 1134 include the instructions 1136 executable by the processor(s) 1120 to initiate, control, or perform one or more operations described with reference to FIGs 1-9. To illustrate, the one or more applications 1134 include the instructions 1136 executable by the processor(s) 1120 to initiate, control, or perform one or more operations described with reference to receiving, from the automatic direction finder 204 of FIG. 2, the first bearing estimate 242 and the second bearing estimate 244, and determining the location based at least on the first bearing estimate 242 and the second bearing estimate 244. As another illustration, the one or more applications 1134 include the instructions 1136 executable by the processor(s) 1120 to initiate, control, or perform one or more operations described with reference to receiving the first signal 132, the second signal 134, and the third signal 136 of FIG. 1, converting the signals to respective digital signals 114, 116, 118 to the frequency domain representation 120, and generate, based on the frequency domain representation 120, the first bearing estimate 122 for a radio source 138, 140 of the plurality of radio sources.

In some examples, the system memory 1130 includes a non-transitory, computer readable medium (e.g., a computer-readable storage device) storing the instructions 1136 that, when executed by the processor(s) 1120, cause the processor(s) 1120 to initiate, perform, or control operations for automatic direction finding. The operations include receiving a first signal from a first loop antenna, a second signal from a second loop antenna, and a third signal from a third loop antenna. The operations also include converting the first signal to a first digital signal, the second signal to a second digital signal, and the third signal to a third digital signal. The operations also include processing the first digital signal, the second digital signal, and the third digital signal over a frequency band associated with one or more radio sources to generate sampled signals. The operations also include generating, based on the sampled signals, a plurality of bearing estimates for each radio source of the one or more radio sources.

In the same or alternative examples, the system memory 1130 includes a non-transitory, computer readable medium (e.g., a computer-readable storage device) storing the instructions 1136 that, when executed by the processor(s) 1120, cause the processor(s) 1120 to initiate, perform, or control operations for automatic direction finding. The operations include receiving, from an automatic direction finder, a first bearing estimate associated with a first orientation relative to a first radio source, wherein the first bearing estimate is based on a first plurality of bearing estimates, and wherein a first portion of the first plurality of bearing estimates is generated by the one or more processors based on a first signal from a first loop antenna and a second portion of the first plurality of bearing estimates is generated by the one or more processors based on a second signal from a second loop antenna. The operations also include receiving, from the automatic direction finder, a second bearing estimate associated with a second orientation relative to a second radio source, wherein the second bearing estimate is based on a second plurality of bearing estimates, and wherein a first portion of the second plurality of bearing estimates is generated by the one or more processors based on the first signal from the first loop antenna and a second portion of the second plurality of bearing estimates is generated by the one or more processors based on the second signal from the second loop antenna. The operations also include determining a location based at least on the first bearing estimate and the second bearing estimate.

The one or more storage devices 1150 include nonvolatile storage devices, such as magnetic disks, optical disks, or flash memory devices. In some examples, the storage devices 1150 include both removable and non-removable memory devices. The storage devices 1150 are configured to store an operating system, images of operating systems, applications (e.g., one or more of the applications 1134), and program data (e.g., the program data 1138). In some examples, the system memory 1130, the storage devices 1150, or both, include tangible computer-readable media. In some examples, one or more of the storage devices 1150 are external to the computing device 1110.

The one or more input/output interfaces 1140 enable the computing device 1110 to communicate with one or more input/output devices 1170 to facilitate user interaction. For example, the one or more input/output interfaces 1140 can include a display interface, an input interface, or both. For example, the input/output interface 1140 is adapted to receive input from a user, to receive input from another computing device, or a combination thereof. In some examples, the input/output interface 1140 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some examples, the input/output device(s) 1170 include one or more user interface devices and displays, including some combination of buttons, keyboards, pointing devices, displays, speakers, microphones, touch screens, and other devices.

The processor(s) 1120 are configured to communicate with devices or controllers 1180 via the one or more communications interfaces 1160. For example, the one or more communications interfaces 1160 can include a network interface. The devices or controllers 1180 can include, for example, the automatic direction finder 204 of FIG. 2.

In some examples, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGs. 1-10. In some examples, part or all of one or more of the operations or methods of FIGs. 1-10 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations described herein are intended to provide a general understanding of the structure of the various examples. The illustrations are not intended to serve as a complete description of all of the elements and features of apparatus and systems that utilize the structures or methods described herein. Many other examples can be apparent to those of skill in the art upon reviewing the disclosure. Other examples can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific examples shown. This disclosure is intended to cover any and all subsequent adaptations or variations of various examples. Combinations of the above examples, and other examples not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single example for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples.

Further, the disclosure comprises the following examples:

According to Example 1, an automatic direction finder includes a first loop antenna; a second loop antenna; and one or more processors coupled to the first loop antenna and the second loop antenna, the one or more processors configured to receive a first signal from the first loop antenna and a second signal from the second loop antenna; sample the first signal and the second signal at a sampling rate high enough to capture an entire frequency range associated with a plurality of radio sources to generate a first digital signal and a second digital signal; convert the first digital signal and the second digital signal to a frequency domain representation; and generate, based on the frequency domain representation, a first bearing estimate for a radio source of the plurality of radio sources by comparing the relative amplitudes and phases of the signals as represented in the frequency domain.

Example 2 includes the automatic direction finder of any of Example 1, wherein the one or more processors are configured to generate the first bearing estimate for the radio source by generating the first bearing estimate for the radio source in a parallel processing operation.

Example 3 includes the automatic direction finder of Example 1 or Example 2 and further includes a third loop antenna, and wherein the one or more processors is coupled to the third loop antenna, the one or more processors further configured to receive a third signal from the third loop antenna; and sample the third signal over the frequency range associated with the radio source to generate a third digital signal, wherein the one or more processors are configured to convert the first digital signal, the second digital signal, and the third digital signal to the frequency domain representation.

Example 4 includes the automatic direction finder of Example 3, wherein the one or more processors are further configured to generate, based on the frequency domain representation, a second bearing estimate for the radio source.

Example 5 includes the automatic direction finder of Example 4, wherein the one or more processors are further configured to apply a fault exclusion operation to the first and second bearing estimates for the radio source.

Example 6 includes the automatic direction finder of Example 4 or Example 5, wherein the one or more processors are further configured to generate an overall bearing estimate for the radio source, and wherein the overall bearing estimate comprises an average of the first and second bearing estimates for the radio source.

Example 7 includes the automatic direction finder of any of Examples 1 to 6 and further includes a sense antenna.

Example 8 includes the automatic direction finder of any of Examples 1 to 7, wherein the automatic direction finder is an integrated unit.

Example 9 includes the automatic direction finder of Example 8, wherein the integrated unit is a system-on-chip.

Example 10 includes the automatic direction finder of any of Examples 1 to 9, wherein the frequency range is 0.19-1.75 MHz, or approximately 0.19-1.75 MHz.

Example 10.1 includes an aircraft comprising the automatic direction finder of any of Examples 1 - 10.

According to Example 11, a method includes receiving a first signal from a first loop antenna and a second signal from a second loop antenna; sampling the first signal and the second signal over a frequency range associated with a radio source to generate a first digital signal and a second digital signal; converting the first digital signal and the second digital signal to a frequency domain representation; and generating, based on the frequency domain representation, a first bearing estimate for the radio source.

Example 12 includes the method of Example 11, wherein said generating the first bearing estimate for the radio source comprises generating the first bearing estimate for the radio source in a parallel processing operation.

Example 13 includes the method of Example 11 or Example 12, and further includes receiving a third signal from a third loop antenna; and sampling the third signal over the frequency range associated with the radio source to generate a third digital signal, wherein converting the first digital signal and the second digital signal to the frequency domain representation comprises converting the first digital signal, the second digital signal, and the third digital signal to the frequency domain representation.

Example 14 includes the method of Example 13 and further includes generating, based on the frequency domain representation, a second bearing estimate for the radio source.

Example 15 includes the method of Example 14 and further includes generating an overall bearing estimate for the radio source, and wherein the overall bearing estimate comprises an average of the first and second bearing estimates for the radio source.

According to Example 16, a non-transitory, computer-readable medium comprising instructions that, when executed by one or more processors, cause the one or more processors to receive a first signal from a first loop antenna and a second signal from a second loop antenna; sample the first signal and the second signal at a sampling rate high enough to capture an entire frequency range associated with a plurality of radio sources to generate a first digital signal and a second digital signal; convert the first digital signal and the second digital signal to a frequency domain representation; and generate, based on the frequency domain representation, a first bearing estimate for a radio source of the plurality of radio sources by comparing the relative amplitudes and phases of the signals as represented in the frequency domain.

Example 17 includes the non-transitory, computer-readable medium of Example 16, wherein the instructions, when executed by one or more processors, cause the one or more processors to generate the first bearing estimate for the radio source in a parallel processing operation.

Example 18 includes the non-transitory, computer-readable medium of Example 16 or Example 17, wherein the instructions, when executed by one or more processors, further cause the one or more processors to receive a third signal from a third loop antenna; and sample the third signal over the frequency range associated with the radio source to generate a third digital signal, and wherein the instructions, when executed by the one or more processors, cause the one or more processors to convert the first digital signal and the second digital signal to the frequency domain representation including converting the first digital signal, the second digital signal, and the third digital signal to the frequency domain representation.

Example 19 includes the non-transitory, computer-readable medium of Example 18, wherein the instructions, when executed by one or more processors, further cause the one or more processors to generate, based on the frequency domain representation, a second bearing estimate for the radio source.

Example 20 includes the non-transitory, computer-readable medium of Example 19, wherein the instructions, when executed by one or more processors, further cause the one or more processors to generate an overall bearing estimate for the radio source, and wherein the overall bearing estimate comprises an average of the first and second bearing estimates for the radio source.

According to Example 21, a system includes one or more processors configured to receive, from an automatic direction finder, a first bearing estimate associated with a first orientation relative to a first radio source, wherein the first bearing estimate is based on a first plurality of bearing measurements, and wherein a first portion of the first plurality of bearing measurements is based on a first signal from a first loop antenna and a second portion of the first plurality of bearing measurements is based on a second signal from a second loop antenna; receive, from the automatic direction finder, a second bearing estimate associated with a second orientation relative to a second radio source, wherein the second bearing estimate is based on a second plurality of bearing measurements, and wherein a first portion of the second plurality of bearing measurements is based on the first signal from the first loop antenna and a second portion of the second plurality of bearing measurements is based on the second signal from the second loop antenna; and determine a location based at least on the first bearing estimate and the second bearing estimate.

Example 22 includes the system of Example 21, wherein the one or more processors are configured to determine the location responsive to a signal indicating a failure associated with another positioning system.

Example 23 includes the system of Example 21 or Example 22, wherein the one or more processors are configured to determine the location responsive to one or more controls of an aircraft.

Example 24 includes the system of any of Examples 21 to 23, wherein the one or more processors are configured to determine the location based at least on a known location of the first radio source and a known location of the second radio source.

Example 25 includes the system of Example 24, wherein the known location of the first radio source is a measure of a location of the first radio source relative to a center of the Earth.

Example 26 includes the system of any of Examples 21 to 25, wherein the one or more processors are configured to determine the location based on an iterative process.

Example 27 includes the system of Example 26, wherein the iterative process includes a process based at least on an initial location.

Example 28 includes the system of Example 27, wherein the initial location comprises a last-known location, a starting location, an arbitrary location, or a combination thereof.

Example 29 includes the system of any of Examples 21 to 28, wherein at least one of the first radio source or the second radio source is a nondirectional beacon.

Example 30 includes the system of any of Examples 21 to 29, wherein at least one of the first radio source or the second radio source is an amplitude modulation radio station.

Example 30.1 includes an aircraft comprising the system of any of Examples 21 - 30.

According to Example 31, a non-transitory, computer-readable medium comprising instructions that, when executed by one or more processors, cause the one or more processors to receive, from an automatic direction finder, a first bearing estimate associated with a first orientation relative to a first radio source, wherein the first bearing estimate is based on a first plurality of bearing measurements, and wherein a first portion of the first plurality of bearing measurements is generated by the one or more processors based on a first signal from a first loop antenna and a second portion of the first plurality of bearing measurements is generated by the one or more processors based on a second signal from a second loop antenna; receive, from the automatic direction finder, a second bearing estimate associated with a second orientation relative to a second radio source, wherein the second bearing estimate is based on a second plurality of bearing measurements, and wherein a first portion of the second plurality of bearing measurements is generated by the one or more processors based on the first signal from the first loop antenna and a second portion of the second plurality of bearing measurements is generated by the one or more processors based on the second signal from the second loop antenna; and determine a location based at least on the first bearing estimate and the second bearing estimate.

Example 32 includes the non-transitory, computer-readable medium of Example 31, wherein the instructions, when executed by one or more processors, cause the one or more processors to determine the location responsive to a signal indicating a failure associated with another positioning system or one or more controls of an aircraft.

Example 33 includes the non-transitory, computer-readable medium of Example 31 or Example 32, wherein the instructions, when executed by one or more processors, cause the one or more processors to determine the location based at least on a known location of the first radio source and a known location of the second radio source.

Example 34 includes the non-transitory, computer-readable medium of Example 33, wherein the known location of the first radio source is a measure of a location of the first radio source relative to a center of the Earth.

Example 35 includes the non-transitory, computer-readable medium of any of Examples 31 to 34, wherein the instructions, when executed by one or more processors, cause the one or more processors to determine the location based on an iterative process, and wherein the iterative process includes a process based at least on an initial location.

Example 36 includes the non-transitory, computer-readable medium of Example 35, wherein the initial location comprises a last-known location, a starting location, an arbitrary location, or a combination thereof.

Example 37 includes the non-transitory, computer-readable medium of any of Examples 31 to 36, wherein at least one of the first radio source or the second radio source is a nondirectional beacon or an amplitude modulation radio station.

According to Example 38, a method includes receiving, from an automatic direction finder, a first bearing estimate associated with a first orientation relative to a first radio source, wherein the first bearing estimate is based on a first plurality of bearing measurements, and wherein a first portion of the first plurality of bearing measurements is generated by one or more processors based on a first signal from a first loop antenna and a second portion of the first plurality of bearing measurements is generated by the one or more processors based on a second signal from a second loop antenna; receiving, from the automatic direction finder, a second bearing estimate associated with a second orientation relative to a second radio source, wherein the second bearing estimate is based on a second plurality of bearing measurements, and wherein a first portion of the second plurality of bearing measurements is generated by the one or more processors based on the first signal from the first loop antenna and a second portion of the second plurality of bearing measurements is generated by the one or more processors based on the second signal from the second loop antenna; and determining a location based at least on the first bearing estimate and the second bearing estimate.

Example 39 includes the method of Example 38, wherein said determining the location comprises determining the location based at least on a known location of the first radio source and a known location of the second radio source, and wherein the known location of the first radio source is a measure of a location of the first radio source relative to a center of the Earth.

Example 40 includes the method of Example 38 or Example 39, wherein said determining the location comprises determining the location based on an iterative process; the iterative process includes a process based at least on an initial location; and the initial location comprises a last-known location, a starting location, an arbitrary location, or some combination thereof.

According to Example 41, an antenna includes a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first loop conductive loop.

Example 42 includes the antenna of Example 41, wherein the core is octagonal or substantially octagonal.

Example 43 includes the antenna of Example 41 or Example 42, wherein the core comprises ferrite.

Example 44 includes the antenna of any of Examples 41 to 43 and further includes a sense antenna.

Example 45 includes the antenna of any of Examples 41 to 44 and further includes a first matching network coupled to the first loop antenna.

Example 46 includes the antenna of Example 45 and further includes a second matching network coupled to the second loop antenna.

Example 47 includes the antenna of Example 46 and further includes a third matching network coupled to the third loop antenna.

According to Example 48, a device includes an antenna. The antenna includes a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first loop conductive loop. The device also includes an electronics unit coupled to the antenna, wherein the electronics unit includes a receiver configured to receive a first signal from the first loop antenna, a second signal from the second loop antenna, and a third signal from the third loop antenna. The electronics unit also includes a software-defined radio component configured to process signals associated with the first signal, the second signal, and the third signal.

Example 49 includes the device of Example 48, wherein the core is octagonal or substantially octagonal.

Example 50 includes the device of Example 48 or Example 49, wherein the core comprises ferrite.

Example 51 includes the device of any of Examples 48 to 50 and further includes a sense antenna.

Example 52 includes the device of any of Examples 48 to 51 and further includes a first matching network coupled to the first loop antenna.

Example 53 includes the device of Example 52 and further includes a second matching network coupled to the second loop antenna.

Example 54 includes the device of Example 53 and further includes a third matching network coupled to the third loop antenna.

According to Example 55, a device includes a housing; an antenna contained within the housing. The antenna includes a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first loop conductive loop. The device also includes an electronics unit contained within the housing and coupled to the antenna. The electronics unit includes a receiver configured to receive a first signal from the first loop antenna, a second signal from the second loop antenna, and a third signal from the third loop antenna. The electronics unit also includes a software-defined radio component configured to process signals associated with the first signal, the second signal, and the third signal. The electronics unit also includes an interface contained within the housing and coupled to the electronics unit, wherein the interface is configured to enable data transfer from the electronics unit to a second device external to the housing.

Example 56 includes the device of Example 55, wherein the interface comprises an Aeronautical Radio, Inc. 429 interface.

Example 57 includes the device of Example 55 or Example 56, wherein the core is octagonal or substantially octagonal.

Example 58 includes the device of any of Examples 55 to 57, wherein the core comprises ferrite.

Example 59 includes the device of any of Examples 55 to 58 and further includes a sense antenna.

Example 60 includes the device of any of Examples 55 to 59 and further includes a first matching network coupled to the first loop antenna.

Example 61 includes the antenna of any of Examples 41 to 47, wherein the first angle is ninety degrees or substantially ninety degrees.

Example 62 includes the antenna of Example 61, wherein the second angle is forty-five degrees or substantially forty-five degrees.

Example 63 includes the antenna of any of Examples 41 to 47, wherein the first angle is sixty degrees or substantially sixty degrees.

Example 64 includes the antenna of Example 63, wherein the second angle is one hundred twenty degrees or substantially one hundred twenty degrees.

Example 65 includes the device of any of Examples 48 to 60, wherein the first angle is ninety degrees or substantially ninety degrees.

Example 66 includes the device of Example 65, wherein the second angle is forty-five degrees or substantially forty-five degrees.

Example 67 includes the device of any of Examples 48 to 60, wherein the first angle is sixty degrees or substantially sixty degrees.

Example 68 includes the device of Example 67, wherein the second angle is one hundred twenty degrees or substantially one hundred twenty degrees.

Example 69 includes the antenna of any of Examples 41 to 47, wherein the core is hexagonal or substantially hexagonal.

Example 70 includes the antenna of any of Examples 41 to 47, wherein the core is a regular polygon with a number of sides equal to twice the number of loop antennas of the antenna.

Example 71 includes the device of any of Examples 48 to 60, wherein the core is hexagonal or substantially hexagonal.

Example 72 includes the device of any of Examples 48 to 60, wherein the core is a regular polygon with a number of sides equal to twice the number of loop antennas of the antenna.

Example 73 includes an aircraft comprising the device of any of Examples 48 - 60, 65 - 68 and 72.

The following clauses present further examples:

Clause 1. An automatic direction finder comprising: a first loop antenna; a second loop antenna; and one or more processors coupled to the first loop antenna and the second loop antenna, wherein the one or more processors are configured to: receive a first signal from the first loop antenna and a second signal from the second loop antenna; sample the first signal and the second signal at a sampling rate high enough to capture an entire frequency range associated with a plurality of radio sources to generate a first digital signal and a second digital signal; convert the first digital signal and the second digital signal to a frequency domain representation; and generate, based on the frequency domain representation, a first bearing estimate for a radio source of the plurality of radio sources by comparing relative amplitudes and phases of the first digital signal and the second digital signal as represented in the frequency domain.

Clause 2. The automatic direction finder of Clause 1, wherein the one or more processors are configured to simultaneously generate multiple bearing estimates to the plurality of radio sources in a parallel processing operation based on a single time domain sampling of each of the first loop antenna and the second loop antenna.

Clause 3. The automatic direction finder of Clause 1 or Clause 2, further comprising a third loop antenna, wherein the one or more processors are coupled to the third loop antenna, and wherein the one or more processors are further configured to: receive a third signal from the third loop antenna; and sample the third signal at a sampling rate high enough to capture the entire frequency range to generate a third digital signal, wherein the one or more processors are configured to convert the first digital signal, the second digital signal, and the third digital signal to the frequency domain representation.

Clause 4. The automatic direction finder of Clause 3, wherein the one or more processors are further configured to generate, based on the frequency domain representation, the first bearing estimate and a second bearing estimate for a radio source of the plurality of radio sources.

Clause 5. The automatic direction finder of Clause 4, wherein the one or more processors are further configured to apply a fault detection operation to the first and second bearing estimates.

Clause 6. The automatic direction finder of Clause 4 or Clause 5, wherein the one or more processors are further configured to generate an overall bearing estimate for the radio source, and wherein the overall bearing estimate comprises an average of the first and second bearing estimates.

Clause 7. The automatic direction finder of any preceding Clause, further comprising a sense antenna.

Clause 8. The automatic direction finder of any preceding Clause, wherein the automatic direction finder is an integrated unit.

Clause 9. The automatic direction finder of Clause 8, wherein the integrated unit is a system-on-chip.

Clause 10. The automatic direction finder of any preceding Clause, wherein the frequency range is 0.19-1.75 MHz or approximately 0.19-1.75 MHz.

Clause 11. A method comprising: receiving a first signal from a first loop antenna and a second signal from a second loop antenna; sampling the first signal and the second signal at a sampling rate high enough to capture an entire frequency range associated with a plurality of radio sources to generate a first digital signal and a second digital signal; converting the first digital signal and the second digital signal to a frequency domain representation; and generating, based on the frequency domain representation, a first bearing estimate for a radio source of the plurality of radio sources by comparing relative amplitudes and phases of the first digital signal and the second digital signal as represented in the frequency domain.

Clause 12. The method of Clause 11, further comprising generating a plurality of bearing estimates for different radio sources of the plurality of radio sources in a parallel processing operation.

Clause 13. The method of Clause 11 or Clause 12, further comprising: receiving a third signal from a third loop antenna; sampling the third signal at a sampling rate high enough to capture the entire frequency range to generate a third digital signal; and converting the third digital signal to the frequency domain representation.

Clause 14. The method of Clause 13, further comprising generating, based on the frequency domain representation, a second bearing estimate for a particular radio source of the plurality of radio sources.

Clause 15. The method of Clause 14, further comprising generating an overall bearing estimate for the radio source, and wherein the overall bearing estimate comprises an average of the first and second bearing estimates obtained from signals from different pairs of loop antennas.

Clause 16. A non-transitory, computer-readable medium comprising instructions that, when executed by one or more processors, cause the one or more processors to: receive a first signal from a first loop antenna and a second signal from a second loop antenna; sample the first signal and the second signal at a sampling rate high enough to capture an entire frequency range associated with a plurality of radio sources to generate a first digital signal and a second digital signal; convert the first digital signal and the second digital signal to a frequency domain representation; and generate, based on the frequency domain representation, a first bearing estimate for a radio source of the plurality of radio sources by comparing relative amplitudes and phases of the first digital signal and the second digital signal as represented in the frequency domain.

Clause 17. The non-transitory, computer-readable medium of Clause 16, wherein the instructions, when executed by one or more processors, cause the one or more processors to generate a plurality of bearing estimates for different radio sources of the plurality of radio sources in a parallel processing operation.

Clause 18. The non-transitory, computer-readable medium of Clause 16 or Clause 17, wherein the instructions, when executed by one or more processors, further cause the one or more processors to: receive a third signal from a third loop antenna; sample the third signal at a sampling rate high enough to capture the entire frequency range to generate a third digital signal; and convert the third digital signal to the frequency domain representation.

Clause 19. The non-transitory, computer-readable medium of Clause 18, wherein the instructions, when executed by one or more processors, further cause the one or more processors to generate, based on the frequency domain representation, a second bearing estimate for a particular radio source of the plurality of radio sources.

Clause 20. The non-transitory, computer-readable medium of Clause 19, wherein the instructions, when executed by one or more processors, further cause the one or more processors to generate an overall bearing estimate for the radio source, and wherein the overall bearing estimate comprises an average of the first and second bearing estimates obtained from signals from different pairs of loop antennas.

Clause 21. An aircraft comprising the automatic direction finder of any of Clauses 1 - 10.

Clause A1. A system comprising: one or more processors configured to: receive, from an automatic direction finder, a first bearing estimate associated with a first orientation relative to a first radio source, wherein the first bearing estimate is based on a first plurality of bearing measurements, and wherein a first portion of the first plurality of bearing measurements is based on a first signal from a first loop antenna and a second portion of the first plurality of bearing measurements is based on a second signal from a second loop antenna; receive, from the automatic direction finder, a second bearing estimate associated with a second orientation relative to a second radio source, wherein the second bearing estimate is based on a second plurality of bearing measurements, and wherein a first portion of the second plurality of bearing measurements is based on the first signal from the first loop antenna and a second portion of the second plurality of bearing measurements is based on the second signal from the second loop antenna; and determine a location based at least on the first bearing estimate and the second bearing estimate.

Clause A2. The system of Clause A1, wherein the one or more processors are configured to determine the location responsive to a signal indicating a failure associated with another positioning system.

Clause A3. The system of Clause A1 or Clause A2, wherein the one or more processors are configured to determine the location responsive to one or more controls of an aircraft.

Clause A4. The system of any of Clauses A1-A3, wherein the one or more processors are configured to determine the location based at least on a known location of the first radio source and a known location of the second radio source.

Clause A5. The system of Clause A4, wherein the known location of the first radio source is a measure of a location of the first radio source relative to a center of the Earth.

Clause A6. The system of any of Clauses A1-A5, wherein the one or more processors are configured to determine the location based on an iterative process.

Clause A7. The system of Clause A6, wherein the iterative process includes a process based at least on an initial location.

Clause A8. The system of Clause A7, wherein the initial location comprises a last-known location, a starting location, an arbitrary location, or a combination thereof.

Clause A9. The system of any of Clauses A1-A8, wherein at least one of the first radio source or the second radio source is a nondirectional beacon.

Clause A10. The system of any of Clauses A1-A9, wherein at least one of the first radio source or the second radio source is an amplitude modulation radio station.

Clause A11. A non-transitory, computer-readable medium comprising instructions that, when executed by one or more processors, cause the one or more processors to: receive, from an automatic direction finder, a first bearing estimate associated with a first orientation relative to a first radio source, wherein the first bearing estimate is based on a first plurality of bearing measurements, and wherein a first portion of the first plurality of bearing measurements is generated by the one or more processors based on a first signal from a first loop antenna and a second portion of the first plurality of bearing measurements is generated by the one or more processors based on a second signal from a second loop antenna; receive, from the automatic direction finder, a second bearing estimate associated with a second orientation relative to a second radio source, wherein the second bearing estimate is based on a second plurality of bearing measurements, and wherein a first portion of the second plurality of bearing measurements is generated by the one or more processors based on the first signal from the first loop antenna and a second portion of the second plurality of bearing measurements is generated by the one or more processors based on the second signal from the second loop antenna; and determine a location based at least on the first bearing estimate and the second bearing estimate.

Clause A12. The non-transitory, computer-readable medium of Clause A11, wherein the instructions, when executed by one or more processors, cause the one or more processors to determine the location responsive to a signal indicating a failure associated with another positioning system or one or more controls of an aircraft.

Clause A13. The non-transitory, computer-readable medium of Clause A11 or Clause A12, wherein the instructions, when executed by one or more processors, cause the one or more processors to determine the location based at least on a known location of the first radio source and a known location of the second radio source.

Clause A14. The non-transitory, computer-readable medium of Clause A13, wherein the known location of the first radio source is a measure of a location of the first radio source relative to a center of the Earth.

Clause A15. The non-transitory, computer-readable medium of any of Clauses A11-A14, wherein the instructions, when executed by one or more processors, cause the one or more processors to determine the location based on an iterative process, wherein the iterative process includes a process based at least on an initial location.

Clause A16. The non-transitory, computer-readable medium of Clause A15, wherein the initial location comprises a last-known location, a starting location, an arbitrary location, or a combination thereof.

Clause A17. The non-transitory, computer-readable medium of any of Clauses A11-A16, wherein at least one of the first radio source or the second radio source is a nondirectional beacon or an amplitude modulation radio station.

Clause A18. A method comprising: receiving, from an automatic direction finder, a first bearing estimate associated with a first orientation relative to a first radio source, the first bearing estimate based on a first plurality of bearing measurements, wherein a first portion of the first plurality of bearing measurements is generated by one or more processors based on a first signal from a first loop antenna and a second portion of the first plurality of bearing measurements is generated by the one or more processors based on a second signal from a second loop antenna; receiving, from the automatic direction finder, a second bearing estimate associated with a second orientation relative to a second radio source, the second bearing estimate based on a second plurality of bearing measurements, wherein a first portion of the second plurality of bearing measurements is generated by the one or more processors based on the first signal from the first loop antenna and a second portion of the second plurality of bearing measurements is generated by the one or more processors based on the second signal from the second loop antenna; and determining a location based at least on the first bearing estimate and the second bearing estimate.

Clause A19. The method of Clause A18, wherein determining the location comprises determining the location based at least on a known location of the first radio source and a known location of the second radio source, and wherein the known location of the first radio source is a measure of a location of the first radio source relative to a center of the Earth.

Clause A20. The method of Clause A19, wherein: said determining the location comprises determining the location based on an iterative process; the iterative process includes a process based at least on an initial location; and the initial location comprises a last-known location, a starting location, an arbitrary location, or some combination thereof.

Clause A21. An aircraft comprising the system of any of Clauses A1 - A10.

Clause B1. An antenna comprising: a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first conductive loop.

Clause B2. The antenna of Clause B1, wherein the core comprises ferrite.

Clause B3. The antenna of Clause B1 or Clause B2, further comprising a sense antenna.

Clause B4. The antenna of any of Clauses B1-B3, further comprising a first matching network coupled to the first loop antenna.

Clause B5. The antenna of any of Clauses B1-B4, wherein the core is octagonal or substantially octagonal.

Clause B6. The antenna of any of Clauses B1-B5, wherein the core is hexagonal or substantially hexagonal.

Clause B7. The antenna of any of Clauses B1-B6, wherein the core is a regular polygon with a number of sides equal to twice the number of loop antennas of the antenna.

Clause B8. The antenna of any of Clauses B1-B7, wherein the first angle is ninety degrees or substantially ninety degrees.

Clause B9. The antenna of Clause B8, wherein the second angle is forty-five degrees or substantially forty-five degrees.

Clause B10. The antenna of any of Clauses B1-B9, wherein the first angle is sixty degrees or substantially sixty degrees.

Clause B11. The antenna of Clause B10, wherein the second angle is hundred twenty degrees or substantially one hundred twenty degrees.

Clause B12. A device comprising: an antenna comprising: a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first conductive loop; and an electronics unit coupled to the antenna, wherein the electronics unit comprises: a receiver configured to receive a first signal from the first loop antenna, a second signal from the second loop antenna, and a third signal from the third loop antenna; and a software-defined radio component configured to process signals associated with the first signal, the second signal, and the third signal.

Clause B13. The device of Clause B12, wherein the core is octagonal or substantially octagonal.

Clause B14. The device of Clause B12 or Clause B13, wherein the core comprises ferrite.

Clause B15. The device of any of Clauses B12-B14, further comprising a sense antenna.

Clause B16. The device of any of Clauses B12-B15, further comprising a first matching network coupled to the first loop antenna.

Clause B17. A device comprising: a housing; an antenna contained within the housing, wherein the antenna comprises: a core; a first loop antenna comprising a first conductive loop formed around the core; a second loop antenna comprising a second conductive loop formed around the core at a first angle relative to the first conductive loop; and a third loop antenna comprising a third conductive loop formed around the core at a second angle relative to the first conductive loop; an electronics unit contained within the housing and coupled to the antenna, wherein the electronics unit comprises: a receiver configured to receive a first signal from the first loop antenna, a second signal from the second loop antenna, and a third signal from the third loop antenna; and a software-defined radio component configured to process signals associated with the first signal, the second signal, and the third signal; and an interface contained within the housing and coupled to the electronics unit, wherein the interface is configured to enable data transfer from the electronics unit to a second device external to the housing.

Clause B18. The device of Clause B17, wherein the interface comprises an Aeronautical Radio, Inc. 429 interface.

Clause B19. The device of Clause B17 or Clause B18, further comprising a sense antenna.

Clause B20. The device of any of Clauses B17-B19, further comprising a first matching network coupled to the first loop antenna.

Clause B21. An aircraft comprising the device of any of Clauses B12 - B20.

**Claims**

1. An automatic direction finder (100) comprising:

   a first loop antenna (126);
   a second loop antenna (128); and
   one or more processors (106) coupled to the first loop antenna and the second loop antenna, wherein the one or more processors are configured to:

   receive a first signal (132) from the first loop antenna and a second signal (134) from the second loop antenna;
   sample the first signal and the second signal at a sampling rate high enough to capture an entire frequency range associated with a plurality of radio sources to generate a first digital signal (114) and a second digital signal (116);
   convert the first digital signal and the second digital signal to a frequency domain representation; and
   generate, based on the frequency domain representation, a first bearing estimate (122) for a radio source of the plurality of radio sources by comparing relative amplitudes and phases of the first digital signal and the second digital signal as represented in the frequency domain.

2. The automatic direction finder of claim 1, wherein the one or more processors are configured to simultaneously generate multiple bearing estimates for the plurality of radio sources in a parallel processing operation based on a single time domain sampling of each of the first loop antenna and the second loop antenna.

3. The automatic direction finder of claim 1 or claim 2, further comprising a third loop antenna, wherein the one or more processors are coupled to the third loop antenna, and wherein the one or more processors are further configured to:

   receive a third signal from the third loop antenna; and
   sample the third signal at a sampling rate high enough to capture the entire frequency range to generate a third digital signal, wherein the one or more processors are configured to convert the first digital signal, the second digital signal, and the third digital signal to the frequency domain representation.

4. The automatic direction finder of claim 3, wherein the one or more processors are further configured to generate, based on the frequency domain representation, the first bearing estimate and a second bearing estimate for a radio source of the plurality of radio sources.

5. The automatic direction finder of claim 4, wherein the one or more processors are further configured to apply a fault detection operation to the first and second bearing estimates.

6. The automatic direction finder of claim 4 or claim 5, wherein the one or more processors are further configured to generate an overall bearing estimate for the radio source, and wherein the overall bearing estimate comprises an average of the first and second bearing estimates.

7. The automatic direction finder of any preceding claim, wherein the automatic direction finder:

   further comprises a sense antenna; and/or
   is an integrated unit, and optionally, wherein the integrated unit is a system-on-chip.

8. The automatic direction finder of any preceding claim, wherein the frequency range is 0.19-1.75 MHz or approximately 0.19-1.75 MHz.

9. An aircraft comprising the automatic direction finder (100) of any preceding claim.

10. A method comprising:

receiving a first signal (132) from a first loop antenna (126) and a second signal (134) from a second loop antenna (128);

sampling the first signal and the second signal at a sampling rate high enough to capture an entire frequency range associated with a plurality of radio sources (138) to generate a first digital signal (114) and a second digital signal (116);

converting the first digital signal and the second digital signal to a frequency domain representation (144); and generating, based on the frequency domain representation, a first bearing estimate (122) for a radio source of the plurality of radio sources by comparing relative amplitudes and phases of the first digital signal and the second digital signal as represented in the frequency domain.

11. The method of claim 10, wherein the frequency range is 0.19-1.75 MHz or approximately 0.19-1.75 MHz.

12. The method of claim 11, further comprising generating a plurality of bearing estimates for different radio sources of the plurality of radio sources in a parallel processing operation.

13. The method of claim 11 or claim 12, further comprising:

receiving a third signal from a third loop antenna;

sampling the third signal at a sampling rate high enough to capture the entire frequency range to generate a third digital signal; and

converting the third digital signal to the frequency domain representation.

14. The method of claim 13, further comprising generating, based on the frequency domain representation, a second bearing estimate for a particular radio source of the plurality of radio sources, and optionally, further comprising generating an overall bearing estimate for the radio source, and wherein the overall bearing estimate comprises an average of the first and second bearing estimates obtained from signals from different pairs of loop antennas.

15. A computer program comprising computer program instructions that, when executed by one or more computer processors (106, 206), cause the one or more computer processors to carry out the method of any of claims 11 - 14, or a non-transitory, computer-readable medium having stored thereon such a computer program.

**FIG. 1**

COMPUTING DEVICE 102

PROCESSOR(S) 106

SIGNAL SAMPLER(S) 104
FIRST DIGITAL SIGNAL 114
SECOND DIGITAL SIGNAL 116
THIRD DIGITAL SIGNAL 118
FOURTH DIGITAL SIGNAL 119

BEARING ESTIMATE GENERATOR(S) 112
FIRST BEARING ESTIMATE 120
SECOND BEARING ESTIMATE 122

SIGNAL CONVERTER(S) 142
FREQUENCY DOMAIN REPRESENTATION 144

MEMORY 108
SOURCE TRANSMITTER FREQUENCY DATA 124

100

126
FIRST SIGNAL 132

128
SECOND SIGNAL 134

130
THIRD SIGNAL 136

131
FOURTH SIGNAL 137

138

140

EP 4 628 922 A1

FIG. 2

EP 4 628 922 A1

**FIG. 3**

EP 4 628 922 A1

FIG. 4

400

412

420

Processing Chain 422A

Processing Chain 422B

Processing Chain 422C

Bearing to the signal in the first channel

Bearing to the signal in the second channel

Bearing to the signal in the Nth channel

Signal of Interest in Freq Domain

Channel Selection

BPF 418

All signals In Freq Domain

410

408

Circuitry 416

All signals in Band Sampled

406

ADC 414

All signals in Band

404

402

Loop 1 Voltage

Loop 2 Voltage

Loop 2 Voltage

Loop 4 Voltage

Sense Antenna Voltage

FIG. 5

32

EP 4 628 922 A1

**FIG. 6**

EP 4 628 922 A1

FIG. 7

34

800

802

RECEIVE A FIRST SIGNAL FROM A FIRST LOOP ANTENNA AND A SECOND SIGNAL FROM A SECOND LOOP ANTENNA

804

SAMPLE THE FIRST SIGNAL AND THE SECOND SIGNAL AT A SAMPLING RATE HIGH ENOUGH TO CAPTURE AN ENTIRE FREQUENCY RANGE ASSOCIATED WITH A PLURALITY OF RADIO SOURCES TO GENERATE A FIRST DIGITAL SIGNAL (114) AND A SECOND DIGITAL SIGNAL (116)

806

CONVERT THE FIRST DIGITAL SIGNAL AND THE SECOND DIGITAL SIGNAL TO A FREQUENCY DOMAIN REPRESENTATION

808

GENERATE, BASED ON THE FREQUENCY DOMAIN REPRESENTATION, A FIRST BEARING ESTIMATE FOR A RADIO SOURCE OF THE PLURALITY OF RADIO SOURCES BY COMPARING THE RELATIVE AMPLITUDES AND PHASES OF THE FIRST DIGITAL SIGNAL AND THE SECOND DIGITAL SIGNAL AS REPRESENTED IN THE FREQUENCY DOMAIN.

FIG. 8

EP 4 628 922 A1

900 ⟍

```
902
┌─────────────────────────────────────────────────────────────────┐
│   RECEIVING, FROM AN AUTOMATIC DIRECTION FINDER, A FIRST BEARING  │
│ ESTIMATE ASSOCIATED WITH A FIRST ORIENTATION RELATIVE TO A FIRST  │
│   RADIO SOURCE, THE FIRST BEARING ESTIMATE BASED ON A FIRST       │
│ PLURALITY OF BEARING MEASUREMENTS, WHEREIN A FIRST PORTION OF     │
│ THE FIRST PLURALITY OF BEARING MEASUREMENTS IS GENERATED BY THE   │
│ ONE OR MORE PROCESSORS BASED ON A FIRST SIGNAL FROM A FIRST       │
│ LOOP ANTENNA AND A SECOND PORTION OF THE FIRST PLURALITY OF       │
│ BEARING MEASUREMENTS IS GENERATED BY THE ONE OR MORE              │
│ PROCESSORS BASED ON A SECOND SIGNAL FROM A SECOND LOOP ANTENNA    │
└─────────────────────────────────────────────────────────────────┘
```

```
904
┌─────────────────────────────────────────────────────────────────┐
│   RECEIVING, FROM THE AUTOMATIC DIRECTION FINDER, A SECOND        │
│ BEARING ESTIMATE ASSOCIATED WITH A SECOND ORIENTATION RELATIVE    │
│ TO A SECOND RADIO SOURCE, THE SECOND BEARING ESTIMATE BASED ON    │
│ A SECOND PLURALITY OF BEARING MEASUREMENTS, WHEREIN A FIRST       │
│ PORTION OF THE SECOND PLURALITY OF BEARING MEASUREMENTS IS        │
│ GENERATED BY THE ONE OR MORE PROCESSORS BASED ON THE FIRST        │
│ SIGNAL FROM THE FIRST LOOP ANTENNA AND A SECOND PORTION OF THE    │
│ SECOND PLURALITY OF BEARING MEASUREMENTS IS GENERATED BY THE      │
│ ONE OR MORE PROCESSORS BASED ON THE SECOND SIGNAL FROM THE        │
│ SECOND LOOP ANTENNA                                               │
└─────────────────────────────────────────────────────────────────┘
```

```
906
┌─────────────────────────────────────────────────────────────────┐
│ DETERMINING A LOCATION BASED AT LEAST ON THE FIRST BEARING        │
│ ESTIMATE AND THE SECOND BEARING ESTIMATE                          │
└─────────────────────────────────────────────────────────────────┘
```

**FIG. 9**

36

1000 ⟶

1001 — ( START )

1002 — MEASURE BEARINGS TO THE TRANSMITTER LOCATIONS

1004 — FORM A UNIT VECTOR IN THE AIRPLANE REFERENCE FRAME FOR EACH BEARING.

1006 — TRANSFORM UNIT VECTORS IN THE AIRPLANE REFERENCE FRAME TO THE ECEF REFERENCE FRAME USING THE BEST ESTIMATE OF THE USER'S POSITION

1008 — POPULATE THE **H** MATRIX WITH THE UNIT VECTOR ELEMENTS

1010 — COMPUTE A NEW ESTIMATE OF THE POSITION

1012 — COMPARE THE NEW POSITION ESTIMATE TO THE LAST POSITION ESTIMATE

NO ⟵ POSITIONS MATCH WITHIN TOLERANCE? — 1014

YES

1016 — OUTPUT POSITION ESTIMATE

YES ⟵ ANOTHER MEASUREMENT NEEDED? ⟶ NO ⟶ ( END ) — 1020

1018 —

**FIG. 10**

1100 ⬎

INPUT/OUTPUT
DEVICE(S) 1170

COMPUTING DEVICE 1110

SYSTEM MEMORY 1130

OPERATING SYSTEM 1132

APPLICATIONS
(E.G., INSTRUCTIONS) 1134

INSTRUCTION(S) 1136

PROGRAM DATA 1138

SOURCE TRANSMITTER FREQUENCY
DATA 124

KNOWN LOCATION DATA SET 218

PLURALITY OF BEARING
MEASUREMENTS 1105

INPUT/OUTPUT
INTERFACE(S) 1140

PROCESSOR(S)
1120

COMMUNICATIONS
INTERFACE(S) 1160

STORAGE
DEVICE(S) 1150

DEVICE(S) OR
CONTROLLER(S) 1180

**FIG. 11**

Europäisches
Patentamt

European
Patent Office

Office européen
des brevets

# EUROPEAN SEARCH REPORT

**Application Number**

EP 25 15 7959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2011 0022874 A (AGENCY DEFENSE DEV [KR]) 8 March 2011 (2011-03-08) | 1,2,8, 10,12,15 | INV. G01S3/04 |
| Y | * figures 1,4 *<br>* the whole document * | 3-7,9, 11,13,14 | G01S3/30<br>G01S3/48<br>G01S5/10 |
| Y | JP 2020 043378 A (TOSHIBA CORP; TOSHIBA INFRASTRUCTURE SYSTEMS & SOLUTIONS CORP) 19 March 2020 (2020-03-19)<br>* figure 1 * | 3-6,13, 14 | H01Q7/06<br>H01Q21/06<br><br>ADD.<br>H01Q21/29 |
| Y | US 2004/239562 A1 (SCHANTZ HANS GREGORY [US]) 2 December 2004 (2004-12-02)<br>* figure 4 * | 3-6,13, 14 | |
| Y | US 3 967 280 A (MAYER ABBOTT F ET AL) 29 June 1976 (1976-06-29)<br>* columns 1-2; figures 1,5 * | 7,9,11 | |

**TECHNICAL FIELDS SEARCHED (IPC)**

G01S
H01Q

The present search report has been drawn up for all claims

| Place of search | Date of completion of the search | Examiner |
|---|---|---|
| Munich | 30 June 2025 | Ribbe, Jonas |

EPO FORM 1503 03.82 (P04C01)

## ANNEX TO THE EUROPEAN SEARCH REPORT
## ON EUROPEAN PATENT APPLICATION NO.

EP 25 15 7959

This annex lists the patent family members relating to the patent documents cited in  the above-mentioned European search report.
The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| KR 20110022874 A | 08-03-2011 | NONE | |
| JP 2020043378 A | 19-03-2020 | JP 7086797 B2<br>JP 2020043378 A | 20-06-2022<br>19-03-2020 |
| US 2004239562 A1 | 02-12-2004 | NONE | |
| US 3967280 A | 29-06-1976 | NONE | |

EPO FORM P0459

For more details about this annex : see Official Journal of the European Patent Office, No. 12/82